# EUROPEAN PATENT APPLICATION

(11) **EP 4 738 543 A1**
(43) Date of publication of application: **06.05.2026**
(21) Application number: 24881353.7
(22) Date of filing: 26.09.2024
(51) Int. Cl.: H01M 10/6556

(54) **COLLECTING PIPE FITTING, THERMAL MANAGEMENT ASSEMBLY, BATTERY, AND ELECTRIC DEVICE**

(30) Priority: 23.10.2023 CN 202311379236
(71) Applicant: Contemporary Amperex Technology Co., Limited, Ningde, Fujian 352100 (CN)
(72) Inventor: SONG, Feiting, Ningde, Fujian 352100 (CN)
(74) Representative: Kraus & Lederer PartGmbB
(86) International application number: PCT/CN2024/121428
(87) International publication number: WO 2025/086987

(57) **Abstract**

A fluid collecting pipe fitting (10), a thermal management assembly (100), a battery (1000), and an electric device are provided, where the fluid collecting pipe fitting (10) includes: a pipe body (11); a first flow channel port (12) and a plurality of second flow channel ports (13), where along an extension direction of the pipe body (11), at least two of the second flow channel ports (13) are respectively located on both sides of the first flow channel port (12); and a partition structure (14), where the partition structure (14) is disposed inside the pipe body (11), the partition structure (14) separates the first flow channel port (12) from the second flow channel ports (13) inside the pipe body (11), and the plurality of second flow channel ports (13) are in communication with each other inside the pipe body (11).

## Description

### CROSS-REFERENCE TO RELATED APPLICATIONS

This application is based on and claims priority to Chinese Patent Application No. 202311379236.6, filed on October 23, 2023, the entire content of which is incorporated herein by reference.

### TECHNICAL FIELD

This application relates to the field of battery technology, and in particular, to a fluid collecting pipe fitting, a thermal management assembly, a battery, and an electric device.

### BACKGROUND

To allow a battery pack to achieve effective heat dissipation at high temperatures or efficient heating at low temperatures, a common heat management method is to arrange liquid cooling plates at bottoms of battery cells and fill a heat exchange fluid with a specified flow rate into the liquid cooling plates to cool the battery pack, ensuring that the battery pack operates within an appropriate temperature range. The liquid cooling plates arranged at the bottoms of the battery cells mainly include stamped water-cooling plates and harmonica tube-type water-cooling plates. The harmonica tube-type water-cooling plates used currently are typically arranged in series, where a liquid flows into one end of a harmonica tube and flows out of the other end of the harmonica tube. This results in a significant temperature difference across the battery cells, leading to uneven temperature distribution, thereby affecting the safe and reliable operation of the battery pack and shortening the service life of the battery pack.

### SUMMARY

This application aims to address at least one of the technical problems existing in the prior art. To this end, this application proposes a fluid collecting pipe fitting, where the fluid collecting pipe fitting can reduce the production costs and space occupation of a thermal management assembly, reduce the assembly steps and installation space of the thermal management assembly, and improve the temperature uniformity of a battery, thereby improving the temperature uniformity effect of the battery and extending the service life of the battery.

This application further proposes a thermal management assembly including the above fluid collecting pipe fitting.

This application further proposes a battery including the above thermal management assembly.

This application further proposes an electric device including the above thermal management assembly.

According to a first aspect of this application, a fluid collecting pipe fitting includes: a pipe body; a first flow channel port and a plurality of second flow channel ports, where along an extension direction of the pipe body, at least two of the second flow channel ports are respectively located on both sides of the first flow channel port; and a partition structure, where the partition structure is disposed inside the pipe body, the partition structure separates the first flow channel port from the second flow channel ports inside the pipe body, and the plurality of second flow channel ports are in communication with each other inside the pipe body.

According to the fluid collecting pipe fitting of this application, the partition structure is disposed inside the pipe body to separate the first flow channel port from the plurality of second flow channel ports, and the plurality of second flow channel ports are in communication with each other inside the pipe body. The first flow channel port and the second flow channel port may be respectively formed as an input end and an output end of a heat exchange flow channel. This allows one pipe body to implement inflow and outflow of liquid, reducing the number of fluid collecting pipe fittings used, and reducing external connection pipelines, thereby reducing the production costs and space occupation of the thermal management assembly, and reducing the assembly steps and installation space of the thermal management assembly. Additionally, the plurality of second flow channel ports are provided, and at least two second flow channel ports are located on both sides of the first flow channel port, allowing a heat exchange fluid to flow from a periphery to a central region of a battery for heat exchange, or allowing the heat exchange fluid to flow from the central region to the periphery of the battery for heat exchange, thereby improving the temperature uniformity of the battery and extending the service life of the battery.

According to an example embodiment of this application, the fluid collecting pipe fitting further includes a first joint and a second joint, where the first joint is in communication with the first flow channel port through a space inside the pipe body; and the second joint is in communication with the second flow channel port through a space inside the pipe body.

In this embodiment, the first joint and the second joint are provided, so that a liquid required for heat exchange can be supplied to the pipe body, and the liquid after heat exchange can be discharged, thereby achieving heat exchange for the battery and improving the reliability of the battery.

According to an example embodiment of this application, one of the first joint and the second joint is an input joint, and the other is an output joint.

In this embodiment, one of the first joint and the second joint is configured as the input joint and the other is configured as the output joint, achieving the inflow and outflow of liquid, thereby achieving heat exchange for the battery and improving the reliability of the battery.

According to an example embodiment of this application, the pipe body is divided by the partition structure into a first space and a second space that are independent of each other; the first space is in communication with the first flow channel port; the second space is in communication with the second flow channel port; along the extension direction of the pipe body, the second space includes a first section, a second section, and a third section that are sequentially in communication with each other; the first section and the third section are respectively located on both sides of the first space; and the second section is arranged side by side with the first space.

In this embodiment, the first space and the second space are independent of each other and are not in communication with each other, so that two independent flow channels can be formed inside the pipe body, allowing the inflow and outflow of the heat exchange fluid to have no mutual interference. Additionally, the first space and the second space are arranged side by side, which can reduce the size of the pipe body, thereby reducing the space occupation of the fluid collecting pipe fitting.

According to an example embodiment of this application, the partition structure includes a first partition plate and second partition plates, where the first partition plate is configured to separate the second section from the first space; at least two second partition plates are provided and are respectively located at both ends of the first partition plate in the extension direction of the pipe body; and the second partition plates are configured to separate the first section from the first space and separate the third section from the first space.

In this embodiment, the first partition plate and the second partition plate are provided, so that two independent spaces can be formed inside the pipe body, allowing the inflow and outflow of liquid to have no mutual interference, thereby improving the heat exchange effect of the battery.

According to an example embodiment of this application, a length dimension of the first partition plate in the extension direction of the pipe body is greater than or equal to a length dimension of the second section.

In this embodiment, setting the length dimension of the first partition plate in the extension direction of the pipe body to be greater than or equal to the length dimension of the second section can effectively prevent mutual communication between the first space and the second section, thereby improving the airtightness of the first space and the second space.

According to an example embodiment of this application, along the extension direction of the pipe body, the first partition plate extends from the second section to at least one end of the pipe body; the first partition plate is further provided with at least one water passage hole; the water passage hole runs through the first partition plate along a thickness direction; the water passage hole is located at a position of the first partition plate corresponding to the first section; and/or the water passage hole is located at a position of the first partition plate corresponding to the third section.

In this example embodiment, configuring the first partition plate to extend to at least one end of the pipe body can facilitate the positioning of the first partition plate inside the pipe body, thereby improving the ease and accuracy of installation of the first partition plate and the pipe body. Additionally, the water passage hole is formed on an extension section beyond the second section, allowing the second space to remain in communication with the second flow channel port, thereby allowing for the inflow and outflow of liquid in a heat exchange pipeline and achieving heat exchange for the battery.

According to an example embodiment of this application, an inner wall surface of the pipe body is provided with ribs; the ribs extend along the extension direction of the pipe body; and one side of the first partition plate in the thickness direction abuts against the ribs.

In this embodiment, the provision of the ribs can facilitate the positioning of the first partition plate inside the pipe body, thereby improving the ease and accuracy of installation of the first partition plate and the pipe body. Additionally, this can also increase a connection area between the first partition plate and the pipe body, thereby improving the connection stability and airtightness of the first partition plate and the pipe body.

According to an example embodiment of this application, the ribs are provided in plurality; the plurality of ribs are spaced along a circumferential direction of the pipe body; and both sides of the first partition plate in the thickness direction respectively abut against different ribs.

In this embodiment, the plurality of ribs are provided, and both sides of the first partition plate in the thickness direction respectively abut against different ribs, so that the first partition plate can be directly inserted between two adjacent ribs for positioning, thereby improving the ease and accuracy of installation of the first partition plate and the pipe body. Additionally, this can also increase the connection area between the first partition plate and the pipe body, thereby improving the connection stability and airtightness of the first partition plate and the pipe body.

According to an example embodiment of this application, the first partition plate and the second partition plate are connected to each other in a brazing manner.

In this embodiment, the first partition plate and the second partition plate are connected to each other in the brazing manner, which can meet the connection airtightness of the first partition plate and the second partition plate and can also improve the aesthetic appearance and production efficiency of the fluid collecting pipe fitting.

According to an example embodiment of this application, both the first partition plate and the second partition plate are sealingly connected to the inner wall surface of the pipe body.

In this embodiment, configuring both the first partition plate and the second partition plate to be sealingly connected to the inner wall surface of the pipe body allows for the formation of the first space and the second space that are not in communication with each other inside the pipe body.

According to an example embodiment of this application, the first partition plate and the pipe body are integrally formed; and the second partition plate is connected to the first partition plate and the pipe body in a brazing manner.

In this embodiment, configuring the first partition plate and the pipe body to be integrally formed can reduce the assembly steps of the first partition plate and the pipe body, thereby increasing the production rate of the fluid collecting pipe fitting and reducing the production costs of the fluid collecting pipe fitting.

According to an example embodiment of this application, the pipe body is provided with an insertion hole running through the pipe body; at least a portion of the second partition plate extends into the pipe body through the insertion hole; and the first partition plate is sealingly connected to a peripheral wall and/or a peripheral edge of the insertion hole.

In this embodiment, the provision of the insertion hole on the pipe body can improve the ease of connection between the second partition plate and the pipe body, thereby improving the assembly convenience and efficiency of the fluid collecting pipe fitting.

According to an example embodiment of this application, the first partition plate is provided with a slot; in a projection plane perpendicular to an insertion direction of the second partition plate, a projection of the slot at least partially overlaps with a projection of the insertion hole; and an end of the second partition plate extending into the pipe body is fitted into the slot to connect with the first partition plate.

In this embodiment, the slot is provided on the first partition plate, so that the second partition plate can be positioned on the first partition plate, facilitating the assembly and welding of the first partition plate and the second partition plate, thereby preventing displacement of the second partition plate during welding, which otherwise causes assembly difficulties and reduces production efficiency. Additionally, the slot has a simple structure and is easy to design, reducing production difficulties and costs.

According to an example embodiment of this application, at least one end of the first partition plate in a width direction has a connecting plate segment; the connecting plate segment extends along an inner wall of the pipe body and is attached onto the inner wall of the pipe body; and the slot is formed in the connecting plate segment and runs through the connecting plate segment along a thickness direction of the connecting plate segment.

In this embodiment, providing the connecting plate segment can increase the connection area between the first partition plate and the pipe body, thereby improving the connection stability of the first partition plate and the pipe body. Additionally, the formation of the slot in the connecting plate segment can reduce the production complexity of the first partition plate and reduce production costs.

According to an example embodiment of this application, the second partition plate is perpendicular to the first partition plate.

In this embodiment, configuring the second partition plate to be perpendicular to the first partition plate can simplify the structure, reduce the production complexity of the fluid collecting pipe fitting, and improve the ease of insertion of the first partition plate and the second partition plate, thereby improving the assembly efficiency of the fluid collecting pipe fitting.

According to an example embodiment of this application, the fluid collecting pipe fitting further includes an end cap; at least one end of the pipe body is open; and the end cap covers an open portion of the pipe body and is sealingly connected to the pipe body.

In this embodiment, providing the end cap can effectively prevent liquid from leaking out from an open side of the pipe body, which otherwise causes damage to the battery, thereby improving the reliability of the battery. Additionally, configuring at least one end of the pipe body to be open can improve the assembly convenience of the fluid collecting pipe fitting, thereby improving the production efficiency of the fluid collecting pipe fitting.

According to an example embodiment of this application, the end cap has a protruding portion that protrudes toward the interior of the pipe body; and the protruding portion is connected to an inner wall of the pipe body.

In this embodiment, configuring the end cap to have the protruding portion that protrudes toward the interior of the pipe body can increase a contact area between the end cap and the pipe body, thereby improving the sealing effect of the end cap. Additionally, this can also reduce the space occupied by the end cap, thereby reducing the size of the fluid collecting pipe fitting in a length direction and reducing the installation space of the fluid collecting pipe fitting.

According to an example embodiment of this application, the pipe body is a rectangular pipe; the first flow channel port and the second flow channel port are formed on one side surface of the pipe body; and the first joint and the second joint are formed on another side surface of the pipe body.

In this embodiment, configuring the pipe body as the rectangular pipe can reduce the overall weight of the fluid collecting pipe fitting, thereby reducing the overall weight of a thermal management assembly, and improving the lightweight design of the battery. Additionally, this can also reduce the production costs of the fluid collecting pipe fitting and improve the installation stability of the fluid collecting pipe fitting. Furthermore, the first flow channel port and the second flow channel port are formed on one side surface of the pipe body, and the first joint and the second joint are formed on another side surface of the pipe body, effectively preventing the first joint and the second joint from having interference with the heat exchange pipeline, thereby increasing a heat exchange area of the heat exchange pipeline and improving the heat exchange effect of the thermal management assembly.

According to an example embodiment of this application, the partition structure includes a first partition plate extending along a length direction of the pipe body; the first partition plate is inclined relative to a width direction and a thickness direction of the pipe body; and the first flow channel port, the second flow channel port, the first joint, and the second joint are all located on a same side of the first partition plate in a thickness direction.

In this embodiment, configuring the first partition plate to be inclined relative to the width direction and the thickness direction of the pipe body can effectively prevent the first partition plate from interfering with the communication between the first flow channel port and the first joint and the communication between the second flow channel port and the second joint, thereby achieving cyclic heat exchange for the battery.

According to an example embodiment of this application, a peripheral edge of the first flow channel port is provided with a first connecting flange; and a peripheral edge of the second flow channel port is provided with a second connecting flange.

In this embodiment, providing the first connecting flange and the second connecting flange can increase contact areas of the first flow channel port and the second flow channel port with the heat exchange pipeline, thereby improving the connection stability of the heat exchange pipeline and the first flow channel port as well as the second flow channel port.

According to a second aspect of this application, a thermal management assembly includes a thermal management component and the fluid collecting pipe fitting according to the first aspect of this application, where the thermal management component is provided with a first opening and a second opening in communication with an internal flow channel; the first opening is connected to the first flow channel port; and the second opening is connected to the second flow channel port.

According to the thermal management assembly of this application, the fluid collecting pipe fitting according to the first aspect is provided, so that the overall performance of the thermal management assembly is improved.

According to an example embodiment of this application, the thermal management component is internally provided with a heat exchange flow channel; and the first opening and the second opening are respectively an input port and an output port of the heat exchange flow channel.

In this embodiment, providing the heat exchange flow channel can facilitate the flow of a heat exchange fluid, allowing the thermal management assembly to achieve heat exchange for a battery, thereby improving the usage reliability of the battery.

According to an example embodiment of this application, when the thermal management assembly is used for heating a battery cell, the second flow channel port is in communication with the input port of the heat exchange flow channel, and the first flow channel port is in communication with the output port of the heat exchange flow channel; and when the thermal management assembly is used for cooling a battery cell, the first flow channel port is in communication with the input port of the heat exchange flow channel, and the second flow channel port is in communication with the output port of the heat exchange flow channel.

In this embodiment, when the thermal management assembly is used for heating the battery cell, the second flow channel port is configured to be in communication with the input port of the heat exchange flow channel, and the first flow channel port is configured to be in communication with the output port of the heat exchange flow channel; and when the thermal management assembly is used for cooling the battery cell, the first flow channel port is configured to be in communication with the input port of the heat exchange flow channel, and the second flow channel port is configured to be in communication with the output port of the heat exchange flow channel. This allows a flow direction of the heat exchange fluid to be varied, allowing the flow direction of the heat exchange fluid to be selected based on the temperature difference between the center and the periphery of the battery, reducing the temperature difference of the battery, and improving the overall temperature uniformity of the battery, thereby extending the service life of the battery.

According to a third aspect of this application, a battery includes a battery cell and the thermal management assembly according to the second aspect of this application, where the thermal management assembly is configured to perform heat exchange with the battery cell.

According to the battery of this application, the thermal management assembly according to the second aspect is provided, so that the overall performance of the battery is improved.

According to a fourth aspect of this application, an electric device includes the thermal management assembly according to the second aspect of this application.

According to the electric device of this application, the thermal management assembly according to the second aspect is provided, so that the overall performance of the electric device is improved.

According to an example embodiment of this application, the electric device further includes a thermal management input module, a thermal management output module, an input pipeline, and an output pipeline, where the fluid collecting pipe fitting includes a first joint and a second joint; the first joint is in communication with the first flow channel port through a space inside the pipe body; the second joint is in communication with the second flow channel port through a space inside the pipe body; the input pipeline is connected to the thermal management input module and the second joint; and the output pipeline is connected to the thermal management output module and the first joint.

In this embodiment, providing the thermal management input module, the thermal management output module, the input pipeline, and the output pipeline can achieve cyclic heat exchange of the thermal management assembly, improving the heat exchange effect of the battery. Additionally, this also allows for the switching of the heat exchange fluid based on an operating temperature of the battery, thereby extending the service life of the battery.

Additional aspects and advantages of this application will be partially provided in the following description, and some will become apparent from the following description or be understood through the practice of this application.

### BRIEF DESCRIPTION OF DRAWINGS

FIG. 1 is a schematic diagram of a vehicle according to an embodiment of this application;
FIG. 2 is a schematic diagram of a battery according to an embodiment of this application;
FIG. 3 is an exploded view of a battery according to an embodiment of this application;
FIG. 4 is an exploded view of a battery according to some other embodiments of this application;
FIG. 5 is a schematic diagram of a thermal management assembly according to an embodiment of this application;
FIG. 6 is an exploded view of a fluid collecting pipe fitting according to an embodiment of this application;
FIG. 7 is a schematic diagram of a first joint shown in FIG. 6;
FIG. 8 is a schematic diagram of a second partition plate shown in FIG. 6;
FIG. 9 is a partial cross-sectional view of a thermal management assembly according to an embodiment of this application;
FIG. 10 is a schematic diagram of a fluid collecting pipe fitting according to some other embodiments of this application;
FIG. 11 is a schematic diagram of a first partition plate shown in FIG. 10;
FIG. 12 is a schematic diagram of a fluid collecting pipe fitting according to still some other embodiments of this application;
FIG. 13 is a schematic diagram of a first partition plate shown in FIG. 6;
FIG. 14 is a schematic diagram of a fluid collecting pipe fitting from another perspective according to an embodiment of this application;
FIG. 15 is a schematic diagram of an end cap shown in FIG. 14;
FIG. 16 is a schematic diagram of a pipe body shown in FIG. 14;
FIG. 17 is a partial cross-sectional view of a thermal management assembly from another perspective according to an embodiment of this application;
FIG. 18 is a partial cross-sectional view of a thermal management assembly from still another perspective according to an embodiment of this application; and
FIG. 19 is a schematic diagram of a thermal management assembly from another perspective according to an embodiment of this application.

### Description of reference signs:

vehicle 1;
battery 1000;
thermal management assembly 100;
fluid collecting pipe fitting 10; pipe body 11; first space 111; second space 112; insertion hole 113; rib 114; first flow channel port 12; first connecting flange 121; second flow channel port 13; second connecting flange 131; partition structure 14; first partition plate 141; water passage hole 1411; slot 1412; connecting plate segment 1413; second partition plate 142; first joint 15; second joint 16; end cap 17;
thermal management component 20;
battery cell 200; box 300; accommodation cavity 301; main enclosure 302; cover plate 303; bottom protective plate 304;
controller 2000; and motor 3000.

### DESCRIPTION OF EMBODIMENTS

Embodiments of the technical solutions of this application will be described in detail below with reference to the accompanying drawings. The following embodiments are only used to illustrate the technical solutions of this application more clearly and are not intended to limit the scope of protection of this application.

Unless otherwise defined, all technical and scientific terms used herein have the same meaning as commonly understood by persons skilled in the technical field of this application; the terms used herein are only for the purpose of describing specific embodiments and are not intended to limit this application; and the terms "include" and "have" and any variations thereof in the specification, claims, and the description of the drawings above are intended to cover non-exclusive inclusion.

In the description of the embodiments of this application, the technical terms such as "first" and "second" are used only to distinguish different objects and should not be understood as indicating or implying relative importance or implicitly indicating the number, specific order, or primary-secondary relationship of the technical features indicated. In the description of the embodiments of this application, "a plurality of" means two or more, unless otherwise explicitly and specifically limited.

Reference to an "embodiment" herein means that a particular feature, structure, or characteristic described in connection with the embodiment may be included in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein can be combined with other embodiments.

In the description of the embodiments of this application, the term "and/or" merely describes an association relationship between associated objects, indicating that three relationships may exist, for example, A and/or B may indicate the following three cases: presence of only A, presence of both A and B, and presence of only B. Additionally, the character "/" herein generally indicates an "or" relationship between the contextually associated objects.

In the description of the embodiments of this application, the term "a plurality of" means more than two (inclusive).

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on the embodiments of this application.

In the description of the embodiments of this application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand the specific meanings of the above terms in the embodiments of the present application according to specific circumstances.

Currently, from the perspective of market development, the application of traction batteries is becoming increasingly widespread. Traction batteries are not only used in energy storage systems such as hydroelectric, thermal, wind, and solar power plants but are also widely applied in electric vehicles such as electric bicycles, electric motorcycles, and electric transportation tools, as well as in military equipment, aerospace, and other fields. As the application fields of traction batteries continue to expand, the market demand for them is also continuously increasing.

During the use of a battery, to ensure the safety performance of the battery, water-cooling plates are generally arranged at a top of the battery or at a bottom of a module, or an air-cooling method is used for heat dissipation. Most of the water-cooling plates used currently are integrated water-cooling plates or harmonica tube-type water-cooling plates. The harmonica tube-type water-cooling plate typically includes a front-end fluid collecting pipe, a rear-end fluid collecting pipe, and a plurality of harmonica tubes with both ends respectively connected to the front-end fluid collecting pipe and the rear-end fluid collecting pipe. The heat exchange fluid typically enters through the front-end fluid collector, is distributed to the plurality of harmonica tubes through the fluid collecting pipe, and is then discharged through the rear-end fluid collecting pipe. Alternatively, both a water inlet and a water outlet are provided on the front-end fluid collector; then, a partition plate is disposed inside the front-end fluid collecting pipe to separate the water inlet from the water outlet in a length direction of the fluid collecting pipe, forming a U-shaped loop. However, this causes the heat exchange fluid to flow out from one end of the fluid collecting pipe in the length direction to the harmonica tubes, and causes the heat exchange fluid in the harmonica tubes to return to the other end of the fluid collecting pipe in the length direction. The water temperature gradually decreases along a water-cooling direction, forming a significant temperature difference, thus leading to a large temperature difference across the cooling plate and poor uniformity of the battery. Additionally, to address the issue of poor temperature uniformity, in the prior art, the partition plate is disposed inside the fluid collecting pipe, the fluid collecting pipe is also externally connected to a connection pipeline, and a Y-shaped connection pipeline is configured to connect both ends of the fluid collecting pipe, allowing the heat exchange fluid to flow out from both ends of the fluid collecting pipe and return from the middle, or flow out from the middle of the fluid collecting pipe and return from both ends of the fluid collecting pipe. However, this requires a larger installation space for the fluid collecting pipe section, which may increase the external dimensions of the battery.

Based on the above considerations, to address the issue of improving the temperature uniformity of the battery while reducing the installation space required for the harmonica tube-type water-cooling plate, a fluid collecting pipe fitting is designed. A partition structure is disposed inside a pipe body of the fluid collecting pipe fitting to separate a first flow channel port from a second flow channel port. This allows one pipe body to implement inflow and outflow of liquid, reducing the number of fluid collecting pipe fittings used, thereby reducing the installation space required for the harmonica tube-type water-cooling plate. Additionally, a plurality of second flow channel ports are provided, where the plurality of second flow channel ports are in communication with each other inside the pipe body, and at least two second flow channel ports are respectively located on both sides of the first flow channel port. In this way, a plurality of different heat exchange flow channels may be in communication with each other through the space inside the pipe body. Thus, external connection pipelines can be reduced, and the temperature uniformity of the battery can be improved.

During the assembly of the battery, since the partition structure is disposed inside the pipe body, it is only necessary to assemble the heat exchange flow channel according to the dimension of the battery, then assemble and weld a heat exchange pipeline with the fluid collecting pipe fitting, thereby improving the assembly efficiency of the battery. Additionally, since the partition structure is disposed inside the pipe body and can connect a plurality of heat exchange flow channels, external components used can be reduced, and the production costs and installation space of the water-cooling plate can be reduced.

The fluid collecting pipe fitting disclosed in this application can be used in electric apparatuses that use batteries as power sources or in various energy storage systems that use batteries as energy storage elements. The electric apparatus may include but is not limited to a mobile phone, a tablet, a laptop, an electric toy, an electric tool, an electric bicycle, an electric vehicle, a ship, spacecraft, and the like. The electric toy may include a fixed or mobile electric toy, such as a game console, an electric toy car, an electric toy ship, and an electric toy airplane. The spacecraft may include an airplane, a rocket, a space shuttle, and a spaceship.

For ease of description, an electric apparatus according to an embodiment of this application being a vehicle 1 is used as an example for description of the following embodiments.

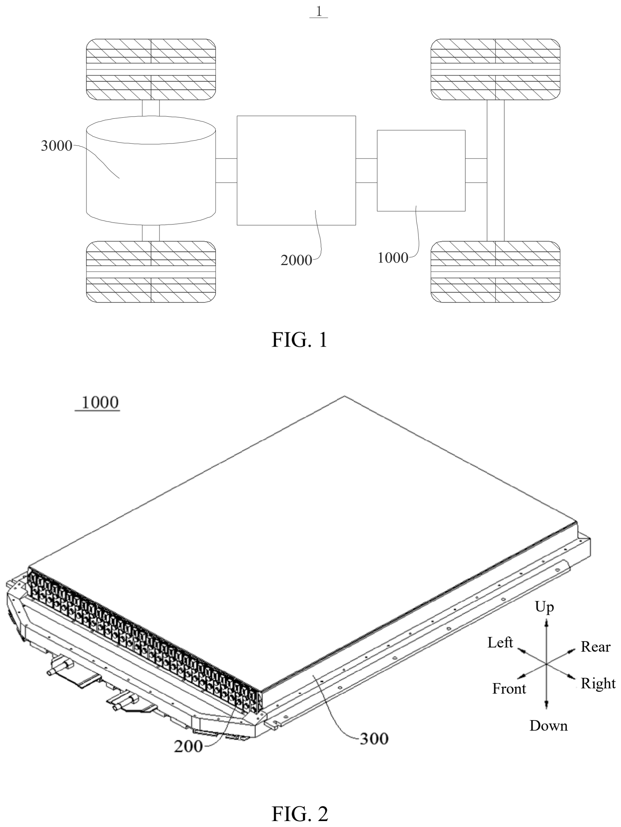

Referring to FIG. 1, FIG. 1 is a schematic diagram of a vehicle 1 according to some embodiments of this application. The vehicle 1 may be a fuel vehicle, a gas vehicle, or a new energy vehicle, where the new energy vehicle may be a battery electric vehicle, a hybrid vehicle, or an extended-range vehicle. A battery 1000 is disposed inside the vehicle 1, and the battery 1000 may be disposed at the bottom, front, or rear of the vehicle 1. The battery 1000 may be configured to supply power to the vehicle 1. For example, the battery 1000 may serve as an operational power source for the vehicle 1. The vehicle 1 may further include a controller 2000 and a motor 3000, where the controller 2000 is configured to control the battery 1000 to supply power to the motor 3000, for example, to satisfy power needs of start, navigation, and driving of the vehicle 1.

In some embodiments of this application, the battery 1000 can serve not only as an operational power source for the vehicle 1 but also as a driving power source for the vehicle 1, replacing or partially replacing fuel or natural gas to provide driving traction for the vehicle 1.

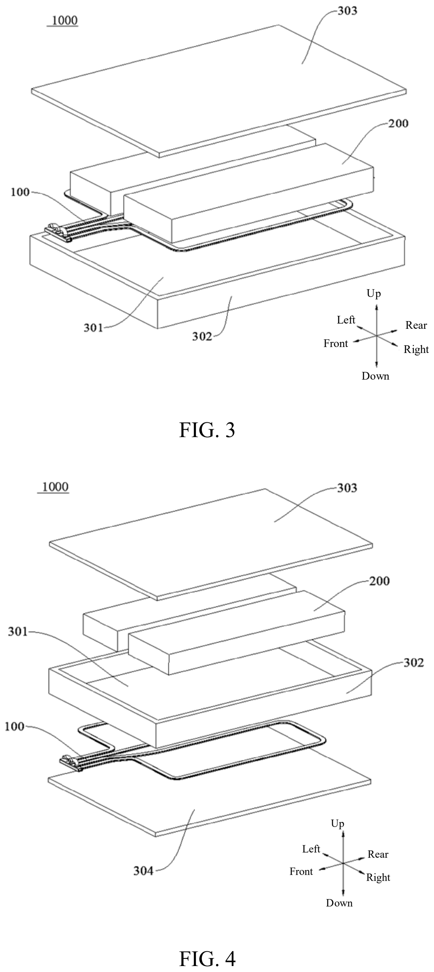

Referring to FIG. 2 to FIG. 4, FIG. 2 is a schematic diagram of a battery 1000 according to some embodiments of this application. FIG. 3 is an exploded view of a battery 1000 according to some embodiments of this application. FIG. 4 is an exploded view of a battery 1000 according to some other embodiments of this application. The battery 1000 includes a box 300, a battery cell 200, and a thermal management assembly 100, where the box 300 has an accommodation cavity 301. The battery cell 200 is accommodated in the accommodation cavity 301 of the box 300. The thermal management assembly 100 is disposed between the battery cell 200 and the box 300. The box 300 is used to provide an accommodation space for the battery cell 200, and the box 300 may adopt various structures. According to an example embodiment of this application, the box 300 may include a first part (for example, a main enclosure 302 described below) and a second part (for example, a cover plate 303 described below), where the first part and the second part fit each other, and the first part and the second part together define an accommodation space for accommodating the battery cell 200. The second part may be a hollow structure with an opening at one end, and the first part may be a plate-like structure, where the first part covers the opening side of the second part, so that the first part and the second part together define the accommodation space; alternatively, both the first part and the second part may each be a hollow structure with an opening at one side, where the opening side of the first part is engaged with the opening side of the second part. Certainly, the box 300 formed by the first part and the second part may have various shapes, such as a cylinder or a cuboid. Optionally, according to an example embodiment of this application, the box 300 further includes a bottom protective plate 304, where the bottom protective plate 304 is disposed on a lower side of a bottom plate of the box to further enhance the load-bearing strength and impact resistance of the bottom of the box. The bottom protective plate 304 may be made of various materials including but not limited to copper, iron, aluminum, stainless steel, aluminum alloy, and the like.

In the battery 1000, a plurality of battery cells 200 may be provided, and the plurality of battery cells 200 may be connected in series, parallel, or series-parallel, where being connected in series-parallel means a combination of series and parallel connections of the plurality of battery cells 200. The plurality of battery cells 200 may be directly connected in series, parallel, or series-parallel, and an entirety formed by the plurality of battery cells 200 is accommodated in the box 300; or certainly, the battery 1000 may be formed by a plurality of battery cells 200 being connected in series, parallel or series-parallel first to form a battery module and then a plurality of battery modules being connected in series, parallel or series-parallel to form an entirety which is accommodated in the box 300. The battery 1000 may further include other structures. For example, the battery 1000 may further include a busbar configured to implement electrical connection between the plurality of battery cells 200.

Each battery cell 200 may be a secondary battery or a primary battery, or may be a lithium-sulfur battery, a sodium-ion battery, or a magnesium-ion battery, without being limited thereto. The battery cell 200 may be cylindrical, flat, cuboidal, or of other shapes.

In the battery 1000, the thermal management assembly 100 may be disposed between the plurality of battery cells 200 and the bottom wall of the box, or between the bottom wall of the box and the bottom protective plate 304, or between the plurality of battery cells 200 and the cover plate 303 of the box, or between two adjacent battery cells 200, to provide heat exchange for the plurality of battery cells 200. According to an example embodiment of this application, the thermal management assembly 100 may include a thermal management component 20 and a fluid collecting pipe fitting 10, where the thermal management component 20 is connected to the fluid collecting pipe fitting 10, and both the thermal management component 20 and the fluid collecting pipe fitting 10 may be rectangular pipes or pipes of other shapes, such as circular pipes.

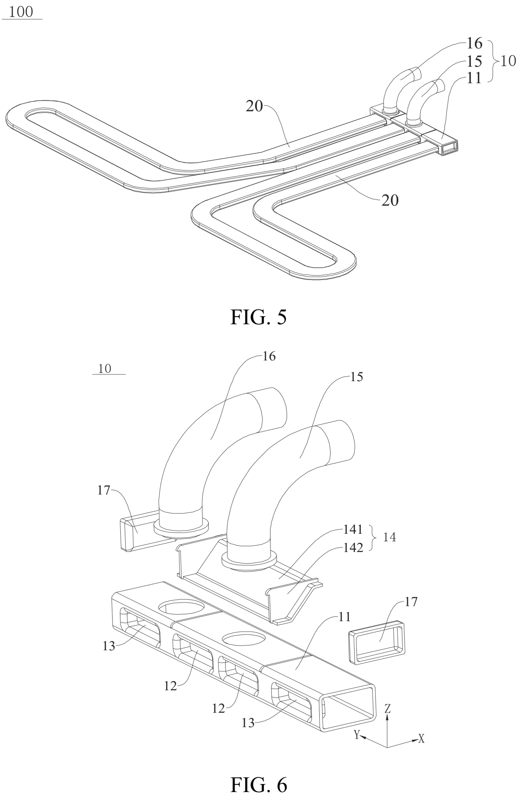

Referring to FIG. 5, FIG. 5 is a schematic diagram of a thermal management assembly 100 according to some embodiments of this application. As shown in FIG. 5, the thermal management assembly 100 includes a fluid collecting pipe fitting 10, a thermal management component 20, and a thermally conductive plate.

The fluid collecting pipe fitting 10 is a component configured to fix the thermal management component 20 and connect liquid inlet and outlet pipes to the thermal management component 20. The fluid collecting pipe fitting 10 is disposed at one end of the thermal management component 20 in a length direction, and both ends of the thermal management component 20 are connected to the fluid collecting pipe fitting 10. Specifically, the size of the fluid collecting pipe fitting 10 can be determined based on the specific size of the battery 1000. The fluid collecting pipe fitting 10 may be made of various materials including but not limited to copper, iron, aluminum, stainless steel, aluminum alloy, and the like. Optionally, the fluid collecting pipe fitting 10 further includes a water inlet and a water outlet, where the water inlet and the water outlet are in communication with the thermal management component 20 for the inflow and outflow of a heat exchange medium.

The thermal management component 20 is a component configured to perform heat exchange with the battery cells 200 to achieve a uniform temperature effect for the battery cells 200. The thermal management component 20 is disposed on one side of the fluid collecting pipe fitting 10 in a width direction, and an inlet and an outlet of the thermal management component 20 are both connected to the fluid collecting pipe fitting 10, forming a cooling loop to perform heat exchange for the battery 1000. Specifically, the shape of the thermal management component 20 may be various, such as a U-shaped pipe or a rectangular loop-shaped pipe. Additionally, the thermal management component 20 may be an integrated component or may be formed by splicing a plurality of pipelines, which can be selected based on the cooling requirements of the battery 1000. A plurality of thermal management components 20 may be provided and may be connected in series or parallel through internal channels of the fluid collecting pipe fitting 10, thereby increasing the diversity of heat exchange flow channel arrangements and improving the adaptability of the thermal management assembly 100. The thermal management component 20 may be made of various materials including but not limited to copper, iron, aluminum, stainless steel, aluminum alloy, and the like.

The thermally conductive plate is a component configured to connect the battery cells 200 to the thermal management assembly 100 and transfer heat. Without limitation, the shape of the thermally conductive plate can be adapted to the shape of the battery 1000. Optionally, the thermally conductive plate may be made of a material with certain hardness and strength (for example, aluminum alloy), so that the thermally conductive plate can ensure the structural strength of the thermal management assembly 100, support a plurality of battery cells 200, and effectively prevent damage to the thermal management component 20 due to the weight of the plurality of battery cells 200. Additionally, the thermally conductive plate is less likely to deform when the battery 1000 is subjected to compression or impact, thereby allowing the battery cells 200 to have higher structural strength and improved safety performance. The thermally conductive plate may alternatively be made of various materials including but not limited to copper, iron, aluminum, stainless steel, aluminum alloy, and the like.

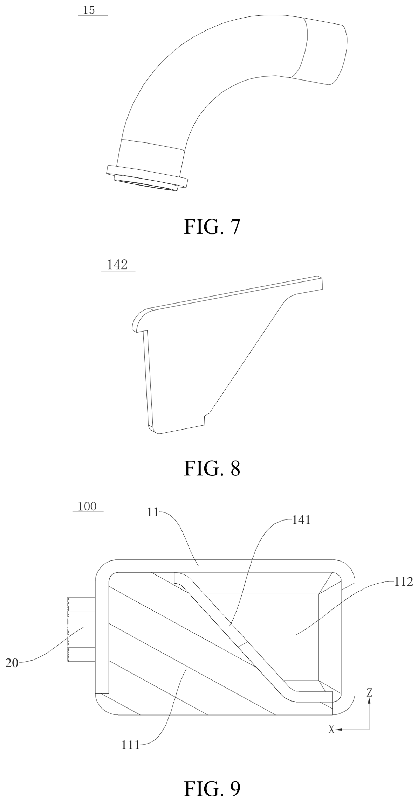

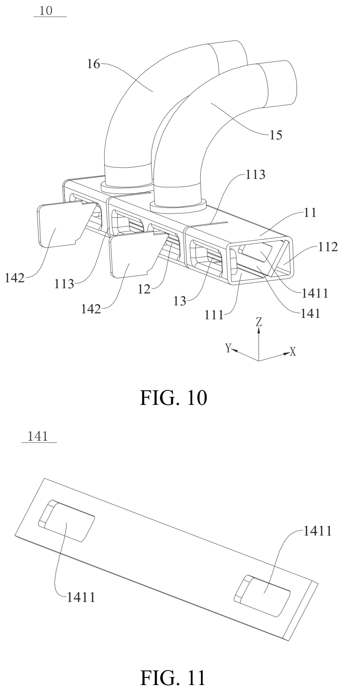

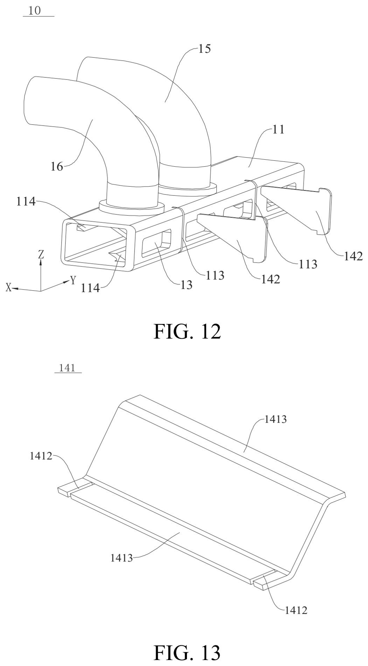

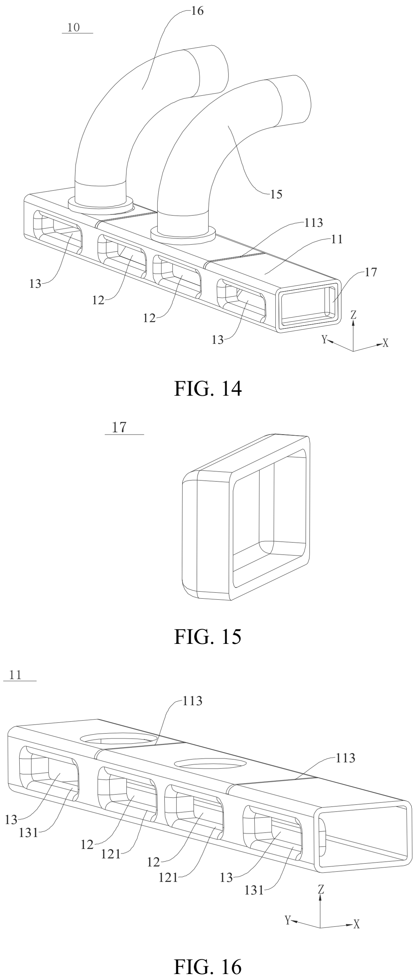

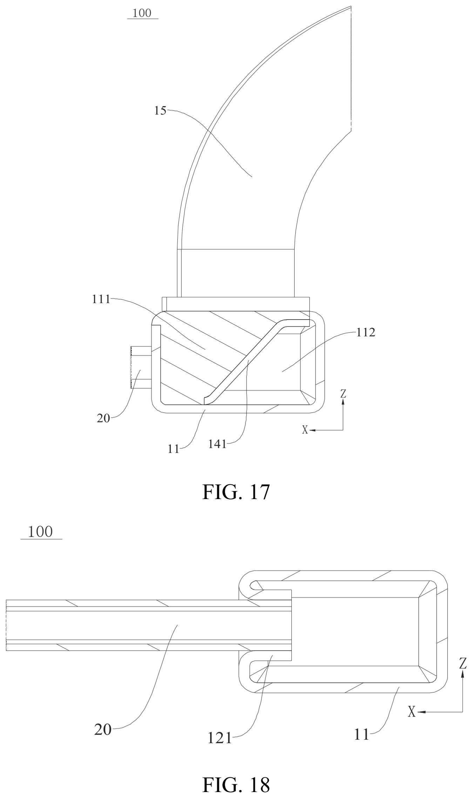

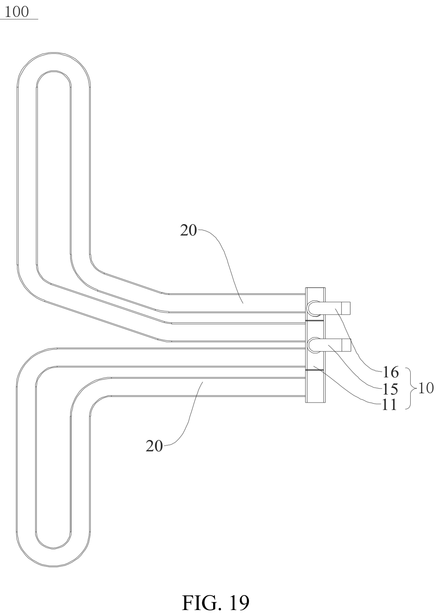

A fluid collecting pipe fitting 10 according to an embodiment of a first aspect of this application is described below with reference to FIG. 6 to FIG. 19. FIG. 6 is an exploded view of a fluid collecting pipe fitting 10 according to some embodiments of this application. FIG. 7 is a schematic diagram of a first joint 15 shown in FIG. 6. FIG. 8 is a schematic diagram of a second partition plate 142 shown in FIG. 6. FIG. 9 is a partial cross-sectional view of a thermal management assembly 100 according to some embodiments of this application. FIG. 10 is a schematic diagram of a fluid collecting pipe fitting 10 according to some other embodiments of this application. FIG. 11 is a schematic diagram of a first partition plate 141 shown in FIG. 10. FIG. 12 is a schematic diagram of a fluid collecting pipe fitting 10 according to still some other embodiments of this application. FIG. 13 is a schematic diagram of a first partition plate 141 shown in FIG. 6. FIG. 14 is a schematic diagram of a fluid collecting pipe fitting 10 from another perspective according to some embodiments of this application. FIG. 15 is a schematic diagram of an end cap 17 shown in FIG. 14. FIG. 16 is a schematic diagram of a pipe body 11 shown in FIG. 14. FIG. 17 is a partial cross-sectional view of a thermal management assembly 100 from another perspective according to some embodiments of this application. FIG. 18 is a partial cross-sectional view of a thermal management assembly 100 from still another perspective according to some embodiments of this application. FIG. 19 is a schematic diagram of a thermal management assembly 100 from another perspective according to some embodiments of this application.

An embodiment of this application proposes a fluid collecting pipe fitting 10. As shown in FIG. 6, the fluid collecting pipe fitting 10 includes: a pipe body 11, a first flow channel port 12, second flow channel ports 13, and a partition structure 14, where a plurality of the second flow channel ports 13 are provided; along an extension direction of the pipe body 11, at least two second flow channel ports 13 are respectively located on both sides of the first flow channel port 12; the partition structure 14 is disposed inside the pipe body 11, and the partition structure 14 separates the first flow channel port 12 from the second flow channel ports 13 inside the pipe body 11; and the plurality of second flow channel ports 13 are in communication with each other inside the pipe body 11.

Specifically, the pipe body 11 is used for collecting and distributing a heat exchange medium; the first flow channel port 12 and the second flow channel port 13 are provided on the pipe body 11; and the first flow channel port 12 and the second flow channel port 13 are respectively connected to both ends of a heat exchange flow channel (for example, both ends of the thermal management component 20 described below) for inputting and outputting the heat exchange medium to and from the fluid collecting pipe fitting 10. The partition structure 14 is disposed inside the pipe body 11 and separates the first flow channel port 12 and the second flow channel port 13 inside the pipe body 11, that is, the first flow channel port 12 and the second flow channel ports 13 are not in communication with each other inside the pipe body 11. This allows the first flow channel port 12 and the second flow channel port 13 to respectively serve as an input end and an output end of the heat exchange flow channel, allowing the pipe body 11 and the heat exchange flow channel to form a complete channel, so that a liquid can enter the heat exchange flow channel from the pipe body 11 for heat exchange and then be discharged from the pipe body 11, completing the heat exchange operation. Therefore, this allows one pipe body 11 to implement inflow and outflow of liquid, reducing the number of fluid collecting pipe fittings 10 used, thereby reducing the production costs and space occupation of the thermal management assembly 100.

Additionally, a plurality of second flow channel ports 13 are provided. For example, two, three, or more second flow channel ports 13 may be provided. The plurality of second flow channel ports 13 are in communication with each other inside the pipe body 11. Along the extension direction of the pipe body 11, at least two second flow channel ports 13 are respectively located on both sides of the first flow channel port 12, that is, at least two second flow channel ports 13 are provided at both ends of the pipe body 11, and the first flow channel port 12 is provided between the at least two second flow channel ports 13. Thus, a heat exchange fluid can flow out from the second flow channel ports 13 on both sides of the pipe body 11, exchange heat, and then return to the pipe body 11 through the first flow channel port 12 in the middle, or the heat exchange fluid can flow out of the pipe body 11 through the first flow channel port 12 in a central region of the pipe body 11, exchange heat, and then return to the pipe body 11 through the second flow channel ports 13 at both ends of the pipe body 11. This allows the heat exchange fluid to flow from a periphery to a central region of the battery 1000 for heat exchange, or allows the heat exchange fluid to flow from the central region to the periphery of the battery 1000 for heat exchange, improving the temperature uniformity of the battery 1000, thereby reducing the assembly steps and installation space of the thermal management assembly 100, improving the temperature uniformity effect of the battery 1000, and extending the service life of the battery 1000.

Optionally, the heat exchange medium may be water, and the heat exchange medium may serve as a heating medium or a cooling medium. When the temperature of the battery 1000 is too high, the temperature of the heat exchange medium is lower than the temperature of the battery 1000, and the heat exchange medium serves as a cooling medium to cool the battery 1000. When the battery 1000 is in a cold operating environment, the battery 1000 has a low temperature, the temperature of the heat exchange medium is higher than an operating temperature of the battery 1000, and the heat exchange medium serves as a heating medium to heat and insulate the battery 1000.

According to the fluid collecting pipe fitting 10 of this embodiment of this application, the partition structure 14 is disposed inside the pipe body 11 to separate the first flow channel port 12 from the plurality of second flow channel ports 13, and the plurality of second flow channel ports 13 are in communication with each other inside the pipe body 11.The first flow channel port 12 and the second flow channel ports 13 can be respectively formed as an input end and an output end of the heat exchange flow channel. This allows one single pipe body 11 to implement inflow and outflow of liquid, reducing the number of fluid collecting pipe fittings 10 used, and reducing external connection pipelines, thereby reducing the production costs and space occupation of the thermal management assembly 100, and reducing the assembly steps and installation space of the thermal management assembly 100. Additionally, the plurality of second flow channel ports 13 are provided, and at least two second flow channel ports 13 are located on both sides of the first flow channel port 12, allowing the heat exchange fluid to flow from the periphery to the central region of the battery 1000 for heat exchange, or allowing the heat exchange fluid to flow from the central region to the periphery of the battery 1000 for heat exchange, thereby improving the temperature uniformity of the battery 1000 and extending the service life of the battery 1000.

According to an example embodiment of this application, as shown in FIG. 6, the fluid collecting pipe fitting 10 further includes a first joint 15 and a second joint 16, where the first joint 15 is in communication with the first flow channel port 12 through a space inside the pipe body 11; and the second joint 16 is in communication with the second flow channel port 13 through a space inside the pipe body 11.

One end of the first joint 15 and one end of the second joint 16 are both connected to the pipe body 11, and the other end of the first joint 15 and the other end of the second joint 16 are both connected to an external pipeline. The first joint 15 and the second joint 16 are used to supply liquid to the pipe body 11 or discharge the liquid after heat exchange. The first joint 15 is in communication with the first flow channel port 12 through the space inside the pipe body 11, the second joint 16 is in communication with the second flow channel ports 13 through the space inside the pipe body 11, and the first flow channel port 12 and the second flow channel port 13 are not in communication with each other. This ensures that the first joint 15 and the second joint 16 do not interfere with each other, and the first flow channel port 12 and the second flow channel port 13 do not interfere with each other, achieving cyclic heat exchange, thereby improving the heat exchange effect of the battery 1000.

In this embodiment, the first joint 15 and the second joint 16 are provided, so that a liquid required for heat exchange can be supplied to the pipe body 11, and the liquid after heat exchange can be discharged, thereby achieving heat exchange for the battery 1000 and improving the reliability of the battery 1000.

According to an example embodiment of this application, one of the first joint 15 and the second joint 16 is an input joint, and the other is an output joint.

In other words, one of the first joint 15 and the second joint 16 is used to supply the heat exchange fluid to the pipe body 11, and the other is used to discharge the fluid after heat exchange. If the first joint 15 is an input joint, the second joint 16 is an output joint. If the first joint 15 is an output joint, the second joint 16 is an input joint. Specifically, the input joint is configured to connect with an external input pipe so as to supply the required liquid to the pipe body 11, and the output joint is configured to connect with an external output pipe so as to discharge a solution collected inside the pipe body 11.

Specifically, the first joint 15 is in communication with the first flow channel port 12 through the space inside the pipe body 11, and the second joint 16 is in communication with the second flow channel port 13 through the space inside the pipe body 11. Thus, when the first joint 15 is the input joint and the second joint 16 is the output joint, the first flow channel port 12 serves as the input end of the heat exchange flow channel, and the second flow channel port 13 serves as the output end of the heat exchange flow channel. When the first joint 15 is the output joint and the second joint 16 is the output joint, the first flow channel port 12 serves as the output end of the heat exchange flow channel, and the second flow channel port 13 serves as the input end of the heat exchange flow channel.

Optionally, a first pipe port and a second pipe port are further formed on the pipe body 11, where the first joint 15 is connected to the first pipe port, and the second joint 16 is connected to the second pipe port. Further, as shown in FIG. 6 and FIG. 7, the first joint 15 is a circular pipe extending along an arc line, and the second joint is a circular pipe extending along an arc line. Ends of the first joint 15 and the second joint 16 connected to the pipe body 11 are each provided with a limiting boss, where the limiting boss protrudes radially outward from an outer side surface of each of the first joint 15 and the second joint 16. An outer diameter of the limiting boss is larger than an inner diameter of each of the first pipe port and the second pipe port. During the installation of the first joint 15 and the second joint 16, the limiting boss can provide a positioning effect, and the limiting boss can also increase areas of junctions between the first joint 15 and the pipe body 11 and between the second joint 16 and the pipe body 11, thereby improving the connection stability and airtightness of the first joint 15 and the second joint 16.

In this embodiment, one of the first joint 15 and the second joint 16 is configured as the input joint and the other is configured as the output joint, achieving the inflow and outflow of liquid, thereby achieving cyclic heat exchange for the battery 1000 and improving the reliability of the battery 1000.

According to an example embodiment of this application, as shown in FIG. 6, the pipe body 11 is divided by the partition structure 14 into a first space 111 and a second space 112 that are independent of each other; the first space 111 is in communication with the first flow channel port 12; the second space 112 is in communication with the second flow channel port 13; along the extension direction of the pipe body 11, the second space 112 includes a first section, a second section, and a third section that are sequentially in communication with each other; the first section and the third section are respectively located on both sides of the first space 111; and the second section is arranged side by side with the first space 111.

The first space 111 and the second space 112 are independent of each other and are not in communication with each other, so that two independent flow channels can be formed. The second space 112 includes the first section, the second section, and the third section that are sequentially in communication with each other. Positions of the first section and the third section are each provided with the second flow channel port 13. The second space 112 allows for communication between a plurality of second flow channel ports 13. The first space 111 is arranged side by side with the second section, and the first space 111 is in communication with the first flow channel port 12, so that the first flow channel port 12 is positioned between the plurality of second flow channel ports 13.

Optionally, a plurality of first flow channel ports 12 are provided. For example, as shown in FIG. 6, two first flow channel ports 12 and two second flow channel ports 13 are provided, where the two second flow channel ports 13 are provided on both sides of the two first flow channel ports 12. In a length direction of the pipe body 11, the second space 112 is C-shaped, and the first space 111 is arranged parallel to the second section and provided between the first section and the third section.

In this embodiment, the first space 111 and the second space 112 are independent of each other and are not in communication with each other, so that two independent flow channels can be formed inside the pipe body 11, allowing the inflow and outflow of the heat exchange fluid to have no mutual interference. Additionally, the first space 111 and the second space 112 are arranged side by side, which can reduce the size of the pipe body 11, thereby reducing the space occupation of the fluid collecting pipe fitting 10.

According to an example embodiment of this application, as shown in FIG. 6, the partition structure 14 includes a first partition plate 141 and second partition plates 142, where the first partition plate 141 is configured to separate the second section from the first space 111; at least two second partition plates 142 are provided and are respectively located at both ends of the first partition plate 141 in the extension direction of the pipe body 11; and the second partition plates 142 are configured to separate the first section from the first space 111 and separate the third section from the first space 111.

Specifically, the first partition plate 141 may be formed as a plate with a specified size, and the size of the first partition plate 141 can be set according to positions and sizes of the pipe body 11 and the first flow channel port 12. The first partition plate 141 extends along the length direction of the pipe body 11 (for example, a direction Y shown in FIG. 6), and both ends of the first partition plate 141 in a width direction are sealingly connected to an inner wall surface of the pipe body 11. In a width direction of the pipe body 11 (for example, a direction X shown in FIG. 6), the first partition plate 141 is configured to separate the second section and the first space 111, so that the second section and the first space 111 are arranged side by side in the width direction of the pipe body 11.

At least two second partition plates 142 are provided, that is, two, three, or more second partition plates 142 may be provided. When only two second partition plates 142 are provided, the second partition plates 142 are respectively located at both ends of the first partition plate 141 in a length direction and are sealingly connected to the first partition plate 141 and the inner wall surface of the pipe body 11, thereby allowing the first space 111 and the second space 112 to be completely independent of each other and not in communication with each other.

In this embodiment, the first partition plate 141 and the second partition plates 142 are provided, so that two independent spaces can be formed inside the pipe body 11, allowing the inflow and outflow of liquid to have no mutual interference, thereby improving the heat exchange effect of the battery 1000.

According to an example embodiment of this application, a length dimension of the first partition plate 141 in the extension direction of the pipe body 11 is greater than or equal to a length dimension of the second section.

The first partition plate 141 is mainly configured to separate the second section from the first space 111; and the second partition plates 142 are provided at both ends of the first partition plate 141 in the length direction to separate the first section from the first space 111 and separate the third section from the first space 111. Thus, setting the length dimension of the first partition plate 141 in the extension direction of the pipe body 11 to be greater than or equal to the length dimension of the second section can effectively prevent mutual communication between the first space 111 and the second section, thereby improving the airtightness of the first space 111 and the second space 112.

In this embodiment, setting the length dimension of the first partition plate 141 in the extension direction of the pipe body 11 to be greater than or equal to the length dimension of the second section can effectively prevent mutual communication between the first space 111 and the second section, thereby improving the airtightness of the first space 111 and the second space 112.

According to an example embodiment of this application, as shown in FIG. 10 and FIG. 11, along the extension direction of the pipe body 11, the first partition plate 141 extends from the second section to at least one end of the pipe body 11; the first partition plate 141 is further provided with at least one water passage hole 1411; the water passage hole 1411 runs through the first partition plate 141 along a thickness direction; the water passage hole 1411 is located at a position of the first partition plate 141 corresponding to the first section; and/or the water passage hole 1411 is located at a position of the first partition plate 141 corresponding to the third section.

Specifically, the first partition plate 141 may extend to one end of the pipe body 11 or extend to both ends of the pipe body 11. When the first partition plate 141 extends to one end of the pipe body 11, an end face of the first partition plate 141 may be flush with an end face of the pipe body 11, facilitating the positioning of the first partition plate 141 inside the pipe body 11, thereby improving the ease and accuracy of installation of the first partition plate 141 and the pipe body 11.

The water passage hole 1411 is provided in a region of the first partition plate 141 extending from the second section to one end of the pipe body 11, and the water passage hole 1411 runs through the first partition plate 141 along the thickness direction, that is, the water passage hole 1411 can achieve communication between spaces of both sides of the first partition plate 141 in the thickness direction, allowing a liquid to flow from one side to the other side of the first partition plate 141 in the thickness direction through the water passage hole 1411.

At least one water passage hole 1411 is provided on the first partition plate 141, that is, one, two, three, or more water passage holes 1411 may be provided. The water passage hole 1411 may be provided only at a position of the first partition plate 141 corresponding to the first section of the second space 112, or may be provided only at a position of the first partition plate 141 corresponding to the third section of the second space 112; or the two positions may be each provided with the water passage hole 1411.

Specifically, when the first partition plate 141 extends from the second section to one end of the pipe body 11, a portion extending beyond the second section passes through the first section or the third section of the second space 112, dividing the first section or the third section of the second space 112 into two parallel parts in the width direction of the pipe body 11. In this case, the water passage hole 1411 is provided only at the position of the first partition plate 141 corresponding to the first section or the third section. When the first partition plate 141 extends from the second section to both ends of the pipe body 11, extending portions pass through the first section and the third section of the second space 112. In this case, the positions of the first partition plate 141 corresponding to both the first section and the third section each need to be provided with the water passage hole 1411. Additionally, the water passage hole 1411 runs through the first partition plate 141 along the thickness direction. Thus, the water passage 1411 allows the second space 112 to remain in communication with the second flow channel port 13.

In this embodiment, configuring the first partition plate 141 to extend to at least one end of the pipe body 11 can facilitate the positioning of the first partition plate 141 inside the pipe body 11, thereby improving the ease and accuracy of installation of the first partition plate 141 and the pipe body 11. Additionally, the water passage hole 1411 is formed on an extension section beyond the second section, allowing the second space 112 to remain in communication with the second flow channel port 13, thereby allowing for the inflow and outflow of liquid in a heat exchange pipeline and achieving heat exchange for the battery 1000.

According to an example embodiment of this application, as shown in FIG. 12, an inner wall surface of the pipe body 11 is provided with ribs 114; the ribs 114 extend along the extension direction of the pipe body 11; and one side of the first partition plate 141 in the thickness direction abuts against the ribs 114.

The ribs 114 are formed with a certain height. The ribs 114 extend along the length direction of the pipe body 11 to form elongated protrusions. The ribs 114 can enhance the structural strength of the pipe body 11, thereby improving the bending resistance of the pipe body 11. One side of the first partition plate 141 in the thickness direction abuts against the ribs 114. The ribs 114 can be used for positioning the first partition plate 141 inside the pipe body 11, thereby improving the ease and accuracy of installation of the first partition plate 141 and the pipe body 11. Additionally, a connection area between the first partition plate 141 and the pipe body 11 can also be increased, thereby improving the connection stability and airtightness of the first partition plate 141 and the pipe body 11.

In this embodiment, the provision of the ribs 114 can facilitate the positioning of the first partition plate 141 inside the pipe body 11, thereby improving the ease and accuracy of installation of the first partition plate 141 and the pipe body 11. Additionally, this can also increase a connection area between the first partition plate 141 and the pipe body 11, thereby improving the connection stability and airtightness of the first partition plate 141 and the pipe body 11.

According to an example embodiment of this application, as shown in FIG. 12, the ribs 114 are provided in plurality; the plurality of ribs 114 are spaced along a circumferential direction of the pipe body 11; and both sides of the first partition plate 141 in the thickness direction respectively abut against different ribs 114.

For example, two, three, or more ribs 114 may be provided. The circumferential direction of the pipe body 11 refers to a direction surrounding an axial direction of the pipe body 11. Both sides of the first partition plate 141 in the thickness direction respectively abut against different ribs 114, that is, the first partition plate 141 can be directly inserted between two adjacent ribs 114 for positioning, thereby improving the ease and accuracy of installation of the first partition plate 141 and the pipe body 11. Additionally, the connection area between the first partition plate 141 and the pipe body 11 can also be increased, thereby improving the connection stability and airtightness of the first partition plate 141 and the pipe body 11.

In this embodiment, the plurality of ribs 114 are provided, and both sides of the first partition plate 141 in the thickness direction respectively abut against different ribs 114, so that the first partition plate 141 can be directly inserted between two adjacent ribs 114 for positioning, thereby improving the ease and accuracy of installation of the first partition plate 141 and the pipe body 11. Additionally, the connection area between the first partition plate 141 and the pipe body 11 can also be increased, thereby improving the connection stability and airtightness of the first partition plate 141 and the pipe body 11.

According to an example embodiment of this application, the first partition plate 141 and the second partition plate 142 are connected to each other in a brazing manner.

Specifically, brazing refers to a welding method in which a brazing filler metal with a melting point lower than that of a workpiece and the workpiece are heated simultaneously to a melting temperature of the brazing filler metal, and a brazing filler metal liquid fills gaps of a solid workpiece to connect the metal. Brazing has a lower heating temperature, smooth and flat joints, good air-tightness, minimal changes in structure and mechanical properties, small deformation, and precise workpiece size, and can weld both similar and dissimilar materials without strict restrictions on the thickness difference of workpieces. Additionally, brazing can heat the entire workpiece to weld multiple welds at once, improving productivity. Thus, the first partition plate 141 and the second partition plate 142 are connected to each other in the brazing manner, which can meet the connection airtightness of the first partition plate 141 and the second partition plate 142 and can also improve the aesthetic appearance and production efficiency of the fluid collecting pipe fitting 10.

In this embodiment, the first partition plate 141 and the second partition plate 142 are connected to each other in the brazing manner, which can meet the connection airtightness of the first partition plate 141 and the second partition plate 142 and can also improve the aesthetic appearance and production efficiency of the fluid collecting pipe fitting 10.

According to an example embodiment of this application, both the first partition plate 141 and the second partition plate 142 are sealingly connected to the inner wall surface of the pipe body 11.

The first partition plate 141 and the second partition plate 142 are both sealingly connected to the inner wall surface of the pipe body 11, forming a sealed first space 111 and second space 112 inside the pipe body 11, where the first space 111 and the second space 112 are not in communication with each other. Further, the sealing connection may include various methods, such as welding.

In this embodiment, configuring both the first partition plate 141 and the second partition plate 142 to be sealingly connected to the inner wall surface of the pipe body 11 allows for the formation of the first space 111 and second space 112 that are not in communication with each other inside the pipe body 11.

According to an example embodiment of this application, the first partition plate 141 and the pipe body 11 are integrally formed; and the second partition plate 142 is connected to the first partition plate 141 and the pipe body 11 in a brazing manner.

Specifically, the first partition plate 141 and the pipe body 11 are integrally formed, and the second partition plate 142 is connected to the first partition plate 141 and the pipe body 11 in the brazing manner, reducing the welding steps for the first partition plate 141 and the pipe body 11, thereby increasing the production rate of the fluid collecting pipe fitting 10. Additionally, the second partition plate 142 is connected to the first partition plate 141 and the pipe body 11 in the brazing manner, where brazed joints are smooth and flat and have good airtightness, minimal changes in structure and mechanical properties, and small deformation, improving the aesthetics and airtightness of welds, thereby improving the airtightness of the first space 111 and the second space 112, reducing deformation of the welds, and improving the aesthetics of the fluid collecting pipe fitting 10.

Optionally, the first partition plate 141 and the pipe body 11 may be integrally formed by extrusion, and after integral formation, holes can be formed at the required positions. Extrusion molding is an efficient, continuous, low-cost, and high-adaptability molding processing method. Using integral formation through extrusion can increase the production rate of the fluid collecting pipe fitting 10 and reduce the production costs of the fluid collecting pipe fitting 10.

In this embodiment, configuring the first partition plate 141 and the pipe body 11 to be integrally formed can reduce the assembly steps of the first partition plate 141 and the pipe body 11, thereby increasing the production rate of the fluid collecting pipe fitting 10 and reducing the production costs of the fluid collecting pipe fitting 10.

According to an example embodiment of this application, as shown in FIG. 12, the pipe body 11 is provided with an insertion hole 113 running through the pipe body 11; at least a portion of the second partition plate 142 extends into the pipe body 11 through the insertion hole 113; and the first partition plate 141 is sealingly connected to a peripheral wall and/or a peripheral edge of the insertion hole 113.

The second partition plate 142 may be partially inserted into the pipe body 11 or entirely inserted into the pipe body 11. The insertion hole 113 can be used for determining a position of the second partition plate 142 to position the second partition plate 142 on the pipe body 11, thereby facilitating the assembly and welding of the second partition plate 142 with the pipe body 11. The first partition plate 141 is sealingly connected to the peripheral wall and/or peripheral edge of the insertion hole 113, preventing the heat exchange fluid from leaking through the insertion hole 113, thereby improving the airtightness of the pipe body 11 and effectively reducing the safety issues of the battery 1000 due to leakage of the heat exchange fluid.

In this embodiment, the provision of the insertion hole 113 on the pipe body 11 can improve the ease of connection between the second partition plate 142 and the pipe body 11, thereby improving the assembly convenience and efficiency of the fluid collecting pipe fitting 10.

According to an example embodiment of this application, as shown in FIG. 12 and FIG. 13, the first partition plate 141 is provided with a slot 1412; in a projection plane perpendicular to an insertion direction of the second partition plate 142, a projection of the slot 1412 at least partially overlaps with a projection of the insertion hole 113; and an end of the second partition plate 142 extending into the pipe body 11 is fitted into the slot 1412 to connect with the first partition plate 141.

In the projection plane perpendicular to the insertion direction of the second partition plate 142, the projection of the slot 1412 at least partially overlaps with the projection of the insertion hole 113, that is, in the projection plane perpendicular to the insertion direction of the second partition plate 142, the projection of the slot 1412 and the projection of the insertion hole 113 may partially or entirely overlap, meaning that the slot 1412 and the insertion hole 113 are at least partially aligned in the insertion direction of the second partition plate 142. This can improve the installation accuracy of the second partition plate 142 and the first partition plate 141, thereby improving the connection airtightness of the first partition plate 141 and the second partition plate 142.

In this embodiment, the slot 1412 is provided on the first partition plate 141, so that the second partition plate 142 can be positioned on the first partition plate 141, facilitating the assembly and welding of the first partition plate 141 and the second partition plate 142, thereby preventing displacement of the second partition plate 142 during welding, which otherwise causes assembly difficulties, and improving production efficiency. Additionally, the slot 1412 has a simple structure and is easy to design, reducing production difficulties and costs.

According to an example embodiment of this application, as shown in FIG. 13, at least one end of the first partition plate 141 in a width direction has a connecting plate segment 1413; the connecting plate segment 1413 extends along an inner wall of the pipe body 11 and is attached onto the inner wall of the pipe body 11; and the slot 1412 is formed in the connecting plate segment 1413 and runs through the connecting plate segment 1413 along a thickness direction of the connecting plate segment 1413.

The first partition plate 141 may have a connecting plate segment 1413 at one end in the width direction or may have connecting plate segments 1413 at both ends in the width direction. The connecting plate segment 1413 extends outward along the width direction of the first partition plate 141 and has a certain width, and the connecting plate segment 1413 is parallel to the inner wall of the pipe body 11 in the thickness direction and is attached onto at least one inner wall of the pipe body 11 in the thickness direction, increasing the connection area between the first partition plate 141 and the pipe body 11, thereby improving the connection stability of the first partition plate 141 and the pipe body 11.

For example, as shown in FIG. 13, the first partition plate 141 is provided with connecting plate segments 1413 at both ends in the width direction, where the connecting plate segments 1413 are parallel to the inner wall surfaces of the pipe body 11 in the thickness direction and are attached onto both inner wall surfaces of the pipe body 11 in the thickness direction.

In this embodiment, providing the connecting plate segment 1413 can increase the connection area between the first partition plate 141 and the pipe body 11, thereby improving the connection stability of the first partition plate 141 and the pipe body 11. Additionally, the formation of the slot 1412 in the connecting plate segment 1413 can reduce the production complexity of the first partition plate 141 and reduce production costs.

According to an example embodiment of this application, the second partition plate 142 is perpendicular to the first partition plate 141.

In this embodiment, configuring the second partition plate 142 to be perpendicular to the first partition plate 141 can simplify the structure, reduce the production complexity of the fluid collecting pipe fitting 10, and improve the ease of insertion of the first partition plate 141 and the second partition plate 142, thereby improving the assembly efficiency of the fluid collecting pipe fitting 10.

According to an example embodiment of this application, as shown in FIG. 14, the fluid collecting pipe fitting 10 further includes an end cap 17; at least one end of the pipe body 11 is open; and the end cap 17 covers an open portion of the pipe body 11 and is sealingly connected to the pipe body 11.

The pipe body 11 may have one open end or both open ends. The open end can facilitate the installation of a partition assembly, improving the assembly convenience of the fluid collecting pipe fitting 10. The end cap 17 is configured to cover the open end of the pipe body 11 and is sealingly connected to the pipe body 11, effectively preventing liquid from leaking from the open end of the pipe body 11, thereby preventing the liquid from flowing out of the open side of the pipe body 11, which otherwise causes damage to the battery 1000, thereby improving the reliability of the battery 1000. Further, the end cap 17 has various structural forms, such as a plug or a plate.

In this embodiment, providing the end cap 17 can effectively prevent liquid from leaking from the open side of the pipe body 11, which otherwise causes damage to the battery 1000, thereby improving the reliability of the battery 1000. Additionally, configuring at least one end of the pipe body 11 to be open can improve the assembly convenience of the fluid collecting pipe fitting 10, thereby improving the production efficiency of the fluid collecting pipe fitting 10.

According to an example embodiment of this application, as shown in FIG. 15, the end cap 17 has a protruding portion that protrudes toward the interior of the pipe body 11; and the protruding portion is connected to an inner wall of the pipe body 11.

A side surface of the end cap 17 facing away from the protrusion is flush with an end face of the open end of the pipe body 11, and the protruding portion extends into the interior of the pipe body 11 and abuts against the inner wall of the pipe body 11, increasing a contact area between the end cap 17 and the pipe body 11, thereby improving the sealing effect of the end cap 17. Additionally, this can also reduce the space occupied by the end cap 17, thereby reducing the size of the fluid collecting pipe fitting 10 in a length direction and reducing the installation space of the fluid collecting pipe fitting 10.

For example, as shown in FIG. 15, the protruding portion of the end cap 17 forms a chamfered surface and a horizontal surface, where the chamfered surface can reduce the resistance of the protruding portion entering the pipe body 11, improving the ease of the end cap 17 entering the pipe body 11. The horizontal surface abuts against the inner wall of the pipe body 11 for sealing, increasing a contact area between the protruding portion and the inner wall of the pipe body 11, thereby improving the sealing effect of the end cap 17. The side surface of the end cap 17 facing away from the protrusion is flush with the end face of the open end of the pipe body 11 and is welded to the peripheral edge of the pipe body 11, further improving the connection airtightness of the end cap 17 and the pipe body 11, effectively preventing liquid from leaking from the open side of the pipe body 11, which otherwise causes damage to the battery 1000, thereby improving the reliability of the battery 1000.

In this embodiment, configuring the end cap 17 to have the protruding portion that protrudes toward the interior of the pipe body 11 can increase the contact area between the end cap 17 and the pipe body 11, thereby improving the sealing effect of the end cap 17. Additionally, this can also reduce the space occupied by the end cap 17, thereby reducing a size of the fluid collecting pipe fitting 10 in the length direction and reducing the installation space of the fluid collecting pipe fitting 10.

According to an example embodiment of this application, as shown in FIG. 16, the pipe body 11 is a rectangular pipe; the first flow channel port 12 and the second flow channel port 13 are formed on one side surface of the pipe body 11; and the first joint 15 and the second joint 16 are formed on another side surface of the pipe body 11.

The rectangular pipe, also known as a flat pipe, is a hollow pipe. With the same bending and torsional strength, the rectangular pipe has a relatively light weight. Configuring the pipe body 11 as the rectangular pipe can reduce the overall weight of the fluid collecting pipe fitting 10, thereby reducing the overall weight of a thermal management assembly 100, and improving the lightweight design of the battery 1000. Additionally, the rectangular pipe has a simple structure, is easy to manufacture, and has a lower cost, thus reducing the production costs of the fluid collecting pipe fitting 10. Furthermore, upper and lower surfaces of the rectangular pipe are flat, so configuring the pipe body 11 as the rectangular pipe can improve the installation stability of the fluid collecting pipe fitting 10.

The first flow channel port 12 and the second flow channel port 13 formed on the same side of the pipe body 11 can improve the ease of connection between the pipe body 11 and the heat exchange pipeline. The first joint 15 and the second joint 16 are formed on another side surface of the pipe body 11, that is, the first joint 15 and the second joint 16 are formed on a same side of the pipe body 11, but are not located on the same side as the first flow channel port 12 and the second flow channel port 13. This can facilitate the connection of the first joint 15 and the second joint 16 to an external water pipe, improving the ease of installation, removal, and maintenance of the external water pipe. Additionally, this can also effectively prevent the first joint 15 and the second joint 16 from having interference with the heat exchange pipeline, thereby increasing a heat exchange area of the heat exchange pipeline, and improving the heat exchange effect of the thermal management assembly 100.

In this embodiment, configuring the pipe body 11 as the rectangular pipe can reduce the overall weight of the fluid collecting pipe fitting 10, thereby reducing the overall weight of the thermal management assembly 100, and improving the lightweight design of the battery 1000. Additionally, this can also reduce the production costs of the fluid collecting pipe fitting 10 and improve the installation stability of the fluid collecting pipe fitting 10. Furthermore, the first flow channel port 12 and the second flow channel port 13 are formed on one side surface of the pipe body 11, and the first joint 15 and the second joint 16 are formed on another side surface of the pipe body 11, effectively preventing the first joint 15 and the second joint 16 from having interference with the heat exchange pipeline, thereby increasing the heat exchange area of the heat exchange pipeline and improving the heat exchange effect of the thermal management assembly 100.

According to an example embodiment of this application, as shown in FIG. 17, the partition structure 14 includes a first partition plate 141 extending along a length direction of the pipe body 11; the first partition plate 141 is inclined relative to a width direction and a thickness direction of the pipe body 11; and the first flow channel port 12, the second flow channel port 13, the first joint 15, and the second joint 16 are all located on a same side of the first partition plate 141 in a thickness direction.

The first flow channel port 12 and the second flow channel port 13 are provided on the same side of the pipe body 11, and the first joint 15 and the second joint 16 are provided on adjacent sides of the pipe body 11. Configuring the first partition plate 141 to be inclined relative to the width direction and the thickness direction of the pipe body 11 can effectively prevent the first partition plate 141 from interfering with the ports of the first flow channel port 12 and the second flow channel port 13 connected to the first joint 15 and the second port. This allows the first flow channel port 12, the second flow channel port 13, the first joint 15, and the second joint 16 to be located on the same side of the first partition plate 141 in the thickness direction, thereby allowing the first joint 15 to be in communication with the first flow channel port 12 through the first space 111, and allowing the second joint 16 to be in communication with the second flow channel port 13 through the second space 112.

In this embodiment, configuring the first partition plate 141 to be inclined relative to the width direction and the thickness direction of the pipe body 11 can effectively prevent the first partition plate 141 from interfering with the communication between the first flow channel port 12 and the first joint 15 and the communication between the second flow channel port 13 and the second joint 16, thereby achieving cyclic heat exchange for the battery 1000. This features a simple structure and convenient assembly.

According to an example embodiment of this application, as shown in FIG. 18, a peripheral edge of the first flow channel port 12 is provided with a first connecting flange 121; and a peripheral edge of the second flow channel port 13 is provided with a second connecting flange 131.

The first flow channel port 12 and the second flow channel port 13 are respectively connected to both ends of the heat exchange pipeline, and the formation of the first connecting flange 121 and the second connecting flange 131 increases contact areas of the first flow channel port 12 and the second flow channel ports 13 with the heat exchange pipeline, thereby improving the connection stability of the heat exchange pipeline and the first flow channel port 12 as well as the second flow channel port 13. Optionally, the first connecting flange 121 and the second connecting flange 131 may be formed by folding toward the inside of the pipe body 11, which can reduce the space occupied by the pipe body 11. Additionally, the inwardly folded flanges can also improve the strength of the pipe body 11 at the junction, improving the connection stability and reliability of the heat exchange pipeline and the pipe body 11, thereby reducing the probability of deformation at the junction between the heat exchange pipeline and the pipe body 11, reducing the risk of liquid leakage at the junction, and extending the service life of the thermal management assembly 100.

In some other embodiments, the depth of the first flow channel port 12 and the depth of the second flow channel port 13 are each not less than preset depths. Specifically, the preset depths are wall thicknesses of the first flow channel port 12 and the second flow channel port 13, which are also welding and overlapping lengths of the first flow channel port 12 and the second flow channel port 13 with the heat exchange pipeline, that is, the lengths of portions of the first flow channel port 12 and the second flow channel port 13 welded to the heat exchange pipeline. The size of the welding and overlapping length can affect the welding quality and the load-bearing capacity of welded components. The overlapping length is not less than 3 mm, meaning that the preset depth is not less than 3 mm. For example, the preset depth may be 3 mm, 4 mm, or more. Setting the overlapping length to be not less than 3 mm can improve the welding quality between the heat exchange pipeline and the pipe body 11, thereby reducing the risk of the heat exchange fluid leaking from the welds.

In this embodiment, providing the first connecting flange 121 and the second connecting flange 131 can increase the contact areas of the first flow channel port 12 and the second flow channel port 13 with the heat exchange pipeline, thereby improving the connection stability of the heat exchange pipeline and the first flow channel port 12 as well as the second flow channel port 13.

According to an embodiment of a second aspect of this application, as shown in FIG. 18 and FIG. 19, a thermal management assembly 100 includes a thermal management component 20 and the fluid collecting pipe fitting 10 according to the embodiments of the first aspect of this application, where the thermal management component 20 is provided with a first opening and a second opening in communication with an internal flow channel; the first opening is connected to the first flow channel port 12; and the second opening is connected to the second flow channel port 13.

Specifically, the thermal management component 20 is a component configured to perform heat exchange with a battery cell 200 to achieve the temperature uniformity effect of a battery 1000. The internal flow channel provided in the thermal management component 20 is used for the flow of a heat exchange fluid, and the thermal management component 20 is connected to the fluid collecting pipe fitting 10 through the first opening and the second opening. The fluid collecting pipe fitting 10 is configured to supply the heat exchange fluid to the thermal management component 20 and collect and discharge the heat exchange fluid after flowing through the thermal management component 20 for heat exchange.

Optionally, the thermal management component 20 may have various shapes, such as a U-shaped pipe or a rectangular loop-shaped pipe.

Optionally, the thermal management component 20 is a pipe body with a rectangular cross-section.

According to the thermal management assembly 100 of this embodiment of this application, the fluid collecting pipe fitting 10 according to the embodiments of the first aspect is provided, so that the overall performance of the thermal management assembly 100 is improved.

According to an example embodiment of this application, the thermal management component 20 is internally provided with a heat exchange flow channel; and the first opening and the second opening are respectively an input port and an output port of the heat exchange flow channel.

Specifically, the heat exchange flow channel is used for the flow of the heat exchange fluid, and the first opening and the second opening are used for inputting the heat exchange fluid to the heat exchange flow channel or outputting the heat exchange fluid after heat exchange in the heat exchange flow channel. If the first opening is an input port of the heat exchange flow channel, the second opening is an output port of the heat exchange flow channel. If the first opening is an output port of the heat exchange flow channel, the second opening is an input port of the heat exchange flow channel.

In this embodiment, providing the heat exchange flow channel can facilitate the flow of the heat exchange fluid, allowing the thermal management assembly 100 to achieve heat exchange for the battery 1000, thereby improving the usage reliability of the battery 1000.

According to an example embodiment of this application, when the thermal management assembly 100 is used for heating a battery cell 200, the second flow channel port 13 is in communication with the input port of the heat exchange flow channel, and the first flow channel port 12 is in communication with the output port of the heat exchange flow channel; and when the thermal management assembly 100 is used for cooling a battery cell 200, the first flow channel port 12 is in communication with the input port of the heat exchange flow channel, and the second flow channel port 13 is in communication with the output port of the heat exchange flow channel.

Specifically, when the battery 1000 operates in a low-temperature environment, due to a low external temperature, the battery 1000 requires thermal insulation, that is, a plurality of battery cells 20 need to be heated. At this time, the temperature of the heat exchange fluid flowing in the heat exchange flow channel of the thermal management component 20 is higher than the temperature of the battery cell 20. Since the peripheral temperature of the battery 1000 dissipates quickly during use, a phenomenon with a higher temperature in the middle and a lower temperature at the periphery is caused. Therefore, when heating the battery 1000, the heat exchange fluid can enter through the peripheral edge of the battery 1000 and flow into the battery 1000. With the second flow channel ports 13 provided on both sides of the first flow channel port 12, when the thermal management assembly 100 is used for heating the battery cell 20, the heat exchange fluid can flow from the second flow channel ports 13 into the heat exchange flow channel and then be discharged from the first flow channel port 12. This results in a higher peripheral temperature and a lower central temperature for the thermal management assembly 100, while the battery 1000 has a lower peripheral temperature and a higher central temperature, allowing for heat neutralization between the two, thereby reducing the overall temperature difference of the battery 1000, and achieving a good temperature uniformity effect.

When the battery 1000 operates at a high temperature, heat is generated due to high current, and the external temperature is high, requiring cooling of the battery 1000. At this time, the temperature of the heat exchange fluid flowing in the heat exchange flow channel of the thermal management component 20 is lower than the temperature of the battery cell 200. Since the heat dissipation effect is poor at the center of the battery 1000, the battery 1000 has a higher temperature at the center and a lower temperature at the periphery. Therefore, when cooling the battery 1000, the heat exchange fluid can enter the center and flow to the periphery while exchanging heat with a plurality of battery cells 200. With the second flow channel ports 13 provided on both sides of the first flow channel port 12, when the thermal management assembly 100 is used for cooling the battery cell 200, the heat exchange fluid can flow from the first flow channel port 12 into the heat exchange flow channel and be discharged from the second flow channel ports 13 after heat exchange. Thus, as the heat exchange fluid flows from the center to the peripheral edge of the battery 1000, the temperature of the heat exchange fluid gradually increases, and the cooling effect relatively decreases, thereby reducing the overall temperature difference of the battery 1000, and improving the temperature uniformity of the battery 1000.

In this embodiment, when the thermal management assembly 100 is used for heating the battery cell 200, the second flow channel port 13 is configured to be in communication with the input port of the heat exchange flow channel, and the first flow channel port 12 is configured to be in communication with the output port of the heat exchange flow channel; and when the thermal management assembly 100 is used for cooling the battery cell 200, the first flow channel port 12 is configured to be in communication with the input port of the heat exchange flow channel, and the second flow channel port 13 is configured to be in communication with the output port of the heat exchange flow channel. This allows a flow direction of the heat exchange fluid to be varied, allowing the flow direction of the heat exchange fluid to be selected based on the temperature difference between the center and the periphery of the battery 1000, reducing the temperature difference of the battery 1000, and improving the overall temperature uniformity of the battery 1000, thereby extending the service life of the battery 1000.

The assembly process of the thermal management assembly 100 of the above embodiments is described below.

A plurality of first flow channel ports 12 and second flow channel ports 13 are formed on one side of the pipe body 11, and first connecting flanges 121 and second connecting flanges 131 are formed by stamping peripheral edges of the first flow channel ports 12 and the second flow channel ports 13. The first flow channel ports 12 and the second flow channel ports 13 are provided on a same side of the pipe body 11, and the second flow channel ports 13 are located on both sides of the first flow channel ports 12. Additionally, first pipe ports and second pipe ports are formed on adjacent sides of the first flow channel ports 12 and the second flow channel ports 13, and insertion holes 113 are formed between the first flow channel ports 12 and the second flow channel ports 13. The first pipe ports correspond to the first flow channel ports 12, and the second pipe ports correspond to the second flow channel ports 13.

The first partition plate 141 is inserted obliquely into the pipe body 11 through the open end of the pipe body 11, and the second partition plate 142 is inserted into the pipe body 11 through the insertion hole 113. The first partition plate 141 is connected to the inner wall of the pipe body 11 in a brazing manner, and the second partition plate 142 is sealingly connected to the pipe body 11 and the first partition plate 141 in a brazing manner, forming two channels that are not in communication with each other inside the pipe body 11.

The first joint 15 and the second joint 16 are correspondingly connected to positions of the first pipe port and the second pipe port.

Both ends of the thermal management component 20 are inserted into the adjacent first flow channel port 12 and second flow channel ports 13 and are connected to each other in a welding manner.

The end cap 17 is configured to cover the open end of the pipe body 11, and the end cap 17 is connected to the pipe body 11 in a welding manner so as to seal the pipe body 11.

According to a third aspect of this application, an embodiment provides a battery 1000 including a battery cell 200 and the thermal management assembly 100 according to the embodiments of the second aspect of this application, where the thermal management assembly 100 is configured to perform heat exchange with the battery cell 200.

A plurality of battery cells 200 are core components of the battery 1000 and are mainly configured to store and release energy. The thermal management assembly 100 is configured to perform heat exchange with the plurality of battery cells 200 to ensure the usage safety of the battery 1000.

Optionally, the battery 1000 further includes a box 300, where the box 300 has an accommodation cavity 301, and the plurality of battery cells 200 and the thermal management assembly 100 are all disposed inside the accommodation cavity 301.

Optionally, the plurality of battery cells 200 may be stacked in the accommodation cavity 301 along a thickness direction of the battery cell 200 (for example, a left-right direction shown in FIG. 3).

Optionally, the box 300 includes a main enclosure 302 and a cover plate 303. The main enclosure 302 is formed as a cuboid box shape, an inner side of the main enclosure 302 defines the accommodation cavity 301, and the top of the accommodation cavity 301 is open. The main enclosure 302 is provided with a plurality of first fixing holes. The cover plate 303 is formed as a horizontal flat plate shape. A plurality of second fixing holes running through the cover plate 303 along a vertical direction are provided on the cover plate 303. The plurality of first fixing holes are in one-to-one correspondence with the plurality of second fixing holes and are aligned vertically. The battery 1000 further includes a plurality of fasteners, where the plurality of fasteners pass through the first fixing holes and the second fixing holes to fasten the cover plate 303 to an upper side of the main enclosure 302.

Optionally, the cover plate 303 may be a carbon steel plate, an aluminum plate, or a composite material plate.

According to the battery 1000 of this embodiment of this application, the thermal management assembly 100 according to the embodiments of the second aspect is provided, so that the overall performance of the battery 1000 is improved.

According to a fourth aspect of this application, an embodiment provides an electric device including the thermal management assembly 100 according to the embodiments of the second aspect of this application.

According to the electric device of this embodiment of this application, the thermal management assembly 100 according to the embodiments of the second aspect is provided, so that the overall performance of the electric device is improved.

According to an example embodiment of this application, the electric device further includes a thermal management input module, a thermal management output module, an input pipeline, and an output pipeline, where the fluid collecting pipe fitting 10 includes a first joint 15 and a second joint 16; the first joint 15 is in communication with the first flow channel port 12 through a space inside the pipe body 11; the second joint 16 is in communication with the second flow channel ports 13 through a space inside the pipe body 11; the input pipeline is connected to the thermal management input module and the second joint 16; and the output pipeline is connected to the thermal management output module and the first joint 15.

Specifically, the thermal management input module is configured to control and determine an input temperature and an input amount of a heat exchange fluid. When the temperature of the battery 1000 exceeds a set temperature, the thermal management system receives an electrical signal indicating that the temperature of the battery 1000 is too high and outputs a signal to the thermal management input module to pump the heat exchange fluid that has exchanged heat with a refrigerant, allowing the thermal management input module to input a low-temperature heat exchange fluid to the thermal management assembly 100 through the input pipeline. When the temperature of the battery 1000 is lower than the set temperature, the thermal management input module switches to a heat exchange fluid that has not exchanged heat with the refrigerant to enter the thermal management assembly 100 for heat exchange. The thermal management output module is configured to return the heat exchange fluid after heat exchange to a heat exchange fluid tank for the next cycle, achieving the cyclic utilization of the heat exchange fluid. The input pipeline is configured to input the heat exchange fluid to the pipe body 11, and the output pipeline is configured to discharge the heat exchange fluid collected inside the pipe body 11. The first joint 15 is configured to connect the output pipeline to the pipe body 11, and the second joint 16 is configured to connect the input pipeline to the pipe body 11.

The set temperature is a normal operating temperature of the battery 1000. One end of the input pipeline is connected to the thermal management input module, and the other end is connected to the second joint 16; and the second joint 16 is in communication with the second flow channel port 13. The second flow channel port 13 is connected to the heat exchange flow channel, and the second flow channel port 13 serves as an input end of the heat exchange flow channel, supplying the heat exchange fluid to the heat exchange flow channel. The heat exchange fluid flows through the heat exchange flow channel, flows from the first flow channel port 12 to the first space 111, is discharged through the first joint 15 to the output pipeline, and then returns to a heat exchange fluid tank via the thermal management output module, completing a cooling cycle.

Furthermore, with the second flow channel ports 13 provided on both sides of the first flow channel port 12, the heat exchange fluid flows in a direction from the peripheral edge of the battery 1000 to the central position and is discharged. When the battery 1000 is heated at a low temperature, since the peripheral battery cells 200 of the battery 1000 have good heat dissipation, resulting in typically low temperatures of the battery cells 200, the heat exchange fluid needs to start heat exchange from the periphery of the battery 1000. When the heat exchange fluid reaches the central position, the temperature of the heat exchange fluid decreases, reducing the overall temperature difference of the battery 1000, and improving the temperature uniformity effect of the battery 1000, thereby extending the service life of the battery 1000.

In this embodiment, providing the thermal management input module, the thermal management output module, the input pipeline, and the output pipeline can achieve cyclic heat exchange of the thermal management assembly 100, improving the heat exchange effect of the battery 1000. Additionally, this also allows the switching of the heat exchange fluid based on an operating temperature of the battery 1000, thereby extending the service life of the battery 1000.

The battery 1000 according to three specific embodiments of this application is described below with reference to FIG. 2 to FIG. 19.

Embodiment 1: As shown in FIG. 3, the battery 1000 includes a plurality of battery cells 200, a box 300, and a thermal management assembly 100, where the box 300 is internally provided with an accommodation cavity 301; the thermal management assembly 100 and the plurality of battery cells 200 are all disposed inside the accommodation cavity 301; and the thermal management assembly 100 is configured to perform heat exchange with the battery cells 200.

As shown in FIG. 5 and FIG. 6, the thermal management assembly 100 includes thermal management components 20 and a fluid collecting pipe fitting 10. The thermal management components 20 are each internally provided with a heat exchange flow channel. Two thermal management components 20 are provided; both ends of the two thermal management components 20 are in communication with a fluid collecting pipe fitting 10. The fluid collecting pipe fitting 10 includes a pipe body 11, a first flow channel port 12, a second flow channel port 13, a partition structure 14, a first joint 15, a second joint 16, and an end cap 17.

Specifically, the pipe body 11 is a rectangular pipe with two open ends. The first flow channel port 12 and the second flow channel port 13 are provided on a same side of the pipe body 11. Two first flow channel ports 12 and two second flow channel ports 13 are provided; and the two second flow channel ports 13 are located on both sides of the first flow channel ports 12.

The partition structure 14 is disposed inside the pipe body 11. The pipe body 11 is divided by the partition structure 14 into a first space 111 and a second space 112 that are independent of each other. The first space 111 is in communication with the two first flow channel ports 12, and the second space 112 is in communication with the two second flow channel ports 13. Along a length direction of the pipe body 11, the second space 112 includes a first section, a second section, and a third section that are sequentially in communication with each other. A cross-section of the second space 112 is C-shaped. The first section and the third section are respectively located on both sides of the first space 111; and the second section is arranged side by side with the first space 111.

The first joint 15 is an output joint for a heat exchange fluid, and the second joint 16 is an input joint for the heat exchange fluid. The first joint 15 and the second joint 16 are provided on adjacent sides of the first flow channel port 12 and the second flow channel port 13. The first joint 15 is in communication with the first flow channel port 12 through the first space 111, and the second joint 16 is in communication with the second flow channel port 13 through the second space 112.

The end cap 17 is provided at two open ends of the pipe body 11, and the end cap 17 has a protruding portion that protrudes toward the interior of the pipe body 11; and the protruding portion is sealingly connected to an inner wall of the pipe body 11 to seal an open side of the pipe body 11.

Further, the partition structure 14 further includes a first partition plate 141 and a second partition plate 142, where the first partition plate 141 and the second partition plate 142 are connected to each other in a brazing manner. Specifically, the first partition plate 141 extends along the length direction of the pipe body 11. A length of the first partition plate 141 is slightly greater than a length of the second section. The first partition plate 141 includes a main plate segment and a connecting plate segment 1413, where the connecting plate segment 1413 is provided at both ends of the main plate segment in a width direction. One end of the connecting plate segment 1413 is connected to the main plate segment, and the other end extends horizontally along a width direction of the pipe body 11. The connecting plate segment 1413 is parallel to two wall surfaces of the pipe body 11 in a thickness direction and is attached onto the two wall surfaces of the pipe body 11 in the thickness direction. Slots 1412 are formed at both ends of the connecting plate segment 1413 in a length direction, and the slots 1412 run through the connecting plate segment 1413 in a thickness direction of the connecting plate segment 1413. The main plate segment is inclined inside the pipe body 11, and a certain included angle is formed between the main plate segment and the connecting plate segment 1413. The second partition plate 142 is provided at both ends of the first partition plate 141 in a length direction, and the second partition plate 142 is provided with limiting protrusions that fit the slots 1412, where the limiting protrusions are inserted into the slots 1412 and are sealingly connected to the first partition plate 141.

Additionally, the pipe body 11 is provided with an insertion hole 113, and at least a portion of the second partition plate 142 extends into the pipe body 11 through the insertion hole 113; and the first partition plate 141 is sealingly connected to a peripheral wall and/or a peripheral edge of the insertion hole 113. In a projection plane perpendicular to an insertion direction of the second partition plate 142, a projection of the slot 1412 overlaps with a projection of the insertion hole 113; and an end of the second partition plate 142 extending into the pipe body 11 is fitted into the slot 1412 to connect with the first partition plate 141.

During heat exchange for the battery 1000, the heat exchange fluid flows from the second joint 16 into the second space 112, then flows through the second space 112 to the two first flow channel ports 12, and is distributed to two different thermal management components 20 through the two first flow channel ports 12. The heat exchange fluid entering the thermal management components 20 flows through the heat exchange flow channel and exchanges heat with the battery cells 200. After heat exchange, the heat exchange fluid is collected into the pipe body 11 through the first flow channel ports 12 and discharged from the thermal management component 20 through the first joint 15, completing the heat exchange.

According to the battery 1000 of the embodiments of the third aspect of this application, the thermal management assembly 100 according to the embodiments of the second aspect is provided, where a partition structure 14 is disposed inside the pipe body 11 of the fluid collecting pipe fitting 10, the partition structure 14 allows for no communication between the first flow channel port 12 and a plurality of second flow channel ports 13, and the plurality of second flow channel ports 13 are in communication with each other inside the pipe body 11. This allows the first flow channel port 12 and the second flow channel port 13 to be respectively configured as the input end and output end of the heat exchange flow channel, allowing one pipe body 11 to implement inflow and outflow of liquid, reducing the number of fluid collecting pipe fittings 10 used, and reducing external connection pipelines, thereby reducing the production costs and space occupation of the thermal management assembly 100, and reducing the assembly steps and installation space of the thermal management assembly 100. Additionally, the plurality of second flow channel ports 13 are provided, and at least two second flow channel ports 13 are located on both sides of the first flow channel port 12, allowing a heat exchange fluid to flow from a periphery to a central region of the battery 1000 for heat exchange, or allowing the heat exchange fluid to flow from the central region to the periphery of the battery 1000 for heat exchange, thereby improving the temperature uniformity of the battery 1000 and extending the service life of the battery 1000.

Embodiment 2: This embodiment is substantially the same as Embodiment 1 in structure, with the same components denoted by the same reference signs. The only difference is that in Embodiment 1, the length of the first partition plate 141 is slightly greater than the size of the second section, and the first partition plate 141 is provided with the connecting plate segment 1413, whereas in Embodiment 2, the length of the first partition plate 141 is the same as the length of the pipe body 11, and two water passage holes 1411 are formed at both ends of the first partition plate 141 in the length direction.

Specifically, the first partition plate 141 is a rectangular plate; both ends of the first partition plate 141 in the length direction are flush with both ends of the pipe body 11 in the length direction, reducing the difficulty of positioning the first partition plate 141 inside the pipe body 11, thereby improving the ease of connection between the first partition plate 141 and the pipe body 11. The water passage holes 1411 are provided at both ends of the first partition plate 141 in the length direction, the water passage holes 1411 run through the first partition plate 141 in the thickness direction, and the water passage holes 1411 are respectively located at positions of the first partition plate 141 corresponding to the first section and the third section and are mainly configured to implement communication between the second space 112 and the second flow channel port 13.

An inner wall surface of the pipe body 11 is provided with ribs 114; the ribs 114 extend along the extension direction of the pipe body 11; and one side of the first partition plate 141 in the thickness direction abuts against the ribs 114. The ribs 114 are provided in plurality, and the plurality of ribs 114 are spaced along a circumferential direction of the pipe body 11. Both sides of the first partition plate 141 in the thickness direction respectively abut against different ribs 114 for positioning the first partition plate 141.

During the assembly of the fluid collecting pipe fitting 10, the first partition plate 141 can be inserted into a space formed by the plurality of ribs 114; both ends of the first partition plate 141 are flush with both ends of the pipe body 11; and then, the first partition plate 141 and the pipe body 11 are connected to each other in a brazing manner to form a sealed connection therebetween.

Embodiment 3: This embodiment is substantially the same as Embodiment 1 in structure, with the same components denoted by the same reference signs. The only difference is that in Embodiment 1, the first partition plate 141 and the pipe body 11 are separate components, whereas in this embodiment, the first partition plate 141 and the pipe body 11 are integrally formed.

Specifically, the first partition plate 141 and the pipe body 11 are integrally formed by extrusion, and the second partition plate 142 is connected to the first partition plate 141 and the pipe body 11 in a brazing manner. After the first partition plate 141 and the pipe body 11 are integrally formed by extrusion, holes are formed at required positions to form the desired flow channels. Then, the second partition plate 142 is inserted into the pipe body 11 to separate the first flow channel port 12 from the second flow channel ports 13 inside the pipe body 11; and the two second flow channel ports 13 are in communication with each other inside the pipe body 11.

Finally, it should be noted that the above embodiments are only used to illustrate the technical solutions of this application and are not intended to limit them. Although this application has been described in detail with reference to the foregoing embodiments, persons of ordinary skill in the art should understand that they can still modify the technical solutions described in the foregoing embodiments or make equivalent replacements for some or all of the technical features. Such modifications or replacements do not cause the essence of the corresponding technical solutions to depart from the scope of the technical solutions of the embodiments of this application and should be included within the scope of the claims and specification of this application. In particular, as long as there is no structural conflict, the various technical features mentioned in the embodiments can be combined in any manner. This application is not limited to the specific embodiments disclosed herein but includes all technical solutions falling within the scope of the claims.

## Claims

1. A fluid collecting pipe fitting, comprising:
a pipe body;
a first flow channel port and a plurality of second flow channel ports, wherein along an extension direction of the pipe body, at least two of the second flow channel ports are respectively located on both sides of the first flow channel port; and
a partition structure, wherein the partition structure is disposed inside the pipe body, the partition structure separates the first flow channel port from the second flow channel ports inside the pipe body, and the plurality of second flow channel ports are in communication with each other inside the pipe body.

2. The fluid collecting pipe fitting according to claim 1, wherein the fluid collecting pipe fitting further comprises a first joint and a second joint; the first joint is in communication with the first flow channel port through a space inside the pipe body; and the second joint is in communication with the second flow channel port through a space inside the pipe body.

3. The fluid collecting pipe fitting according to claim 2, wherein one of the first joint and the second joint is an input joint, and the other is an output joint.

4. The fluid collecting pipe fitting according to any one of claims 1 to 3, wherein the pipe body is divided by the partition structure into a first space and a second space that are independent of each other; the first space is in communication with the first flow channel port; the second space is in communication with the second flow channel port; along the extension direction of the pipe body, the second space comprises a first section, a second section, and a third section that are sequentially in communication with each other; the first section and the third section are respectively located on both sides of the first space; and the second section is arranged side by side with the first space.

5. The fluid collecting pipe fitting according to claim 4, wherein the partition structure comprises a first partition plate and second partition plates; the first partition plate is configured to separate the second section from the first space; at least two second partition plates are provided and are respectively located at both ends of the first partition plate in the extension direction of the pipe body; and the second partition plates are configured to separate the first section from the first space and separate the third section from the first space.

6. The fluid collecting pipe fitting according to claim 5, wherein a length dimension of the first partition plate in the extension direction of the pipe body is greater than or equal to a length dimension of the second section.

7. The fluid collecting pipe fitting according to claim 6, wherein along the extension direction of the pipe body, the first partition plate extends from the second section to at least one end of the pipe body; the first partition plate is further provided with at least one water passage hole; the water passage hole runs through the first partition plate along a thickness direction; the water passage hole is located at a position of the first partition plate corresponding to the first section; and/or the water passage hole is located at a position of the first partition plate corresponding to the third section.

8. The fluid collecting pipe fitting according to any one of claims 5 to 7, wherein an inner wall surface of the pipe body is provided with ribs; the ribs extend along the extension direction of the pipe body; and one side of the first partition plate in the thickness direction abuts against the ribs.

9. The fluid collecting pipe fitting according to claim 8, wherein the ribs are provided in plurality; the plurality of ribs are spaced along a circumferential direction of the pipe body; and both sides of the first partition plate in the thickness direction respectively abut against different ribs.

10. The fluid collecting pipe fitting according to any one of claims 5 to 9, wherein the first partition plate and the second partition plate are connected to each other in a brazing manner.

11. The fluid collecting pipe fitting according to any one of claims 5 to 10, wherein both the first partition plate and the second partition plate are sealingly connected to the inner wall surface of the pipe body.

12. The fluid collecting pipe fitting according to any one of claims 5 to 11, wherein the first partition plate and the pipe body are integrally formed; and the second partition plate is connected to the first partition plate and the pipe body in a brazing manner.

13. The fluid collecting pipe fitting according to any one of claims 5 to 12, wherein the pipe body is provided with an insertion hole running through the pipe body; at least a portion of the second partition plate extends into the pipe body through the insertion hole; and the first partition plate is sealingly connected to a peripheral wall and/or a peripheral edge of the insertion hole.

14. The fluid collecting pipe fitting according to claim 13, wherein the first partition plate is provided with a slot; in a projection plane perpendicular to an insertion direction of the second partition plate, a projection of the slot at least partially overlaps with a projection of the insertion hole; and an end of the second partition plate extending into the pipe body is fitted into the slot to connect with the first partition plate.

15. The fluid collecting pipe fitting according to claim 14, wherein at least one end of the first partition plate in a width direction has a connecting plate segment; the connecting plate segment extends along an inner wall of the pipe body and is attached onto the inner wall of the pipe body; and the slot is formed in the connecting plate segment and runs through the connecting plate segment along a thickness direction of the connecting plate segment.

16. The fluid collecting pipe fitting according to any one of claims 5 to 15, wherein the second partition plate is perpendicular to the first partition plate.

17. The fluid collecting pipe fitting according to any one of claims 1 to 16, wherein the fluid collecting pipe fitting further comprises an end cap; at least one end of the pipe body is open; and the end cap covers an open portion of the pipe body and is sealingly connected to the pipe body.

18. The fluid collecting pipe fitting according to claim 17, wherein the end cap has a protruding portion that protrudes toward the interior of the pipe body; and the protruding portion is connected to an inner wall of the pipe body.

19. The fluid collecting pipe fitting according to claim 2, wherein the pipe body is a rectangular pipe; the first flow channel port and the second flow channel port are formed on one side surface of the pipe body; and the first joint and the second joint are formed on another side surface of the pipe body.

20. The fluid collecting pipe fitting according to claim 19, wherein the partition structure comprises a first partition plate extending along a length direction of the pipe body; the first partition plate is inclined relative to a width direction and a thickness direction of the pipe body; and the first flow channel port, the second flow channel port, the first joint, and the second joint are all located on a same side of the first partition plate in a thickness direction.

21. The fluid collecting pipe fitting according to any one of claims 1 to 20, wherein a peripheral edge of the first flow channel port is provided with a first connecting flange; and a peripheral edge of the second flow channel port is provided with a second connecting flange.

22. A thermal management assembly, comprising a thermal management component and the fluid collecting pipe fitting according to any one of claims 1 to 21, wherein the thermal management component is provided with a first opening and a second opening in communication with an internal flow channel; the first opening is connected to the first flow channel port; and the second opening is connected to the second flow channel port.

23. The thermal management assembly according to claim 22, wherein the thermal management component is provided with a heat exchange flow channel; and the first opening and the second opening are respectively an input port and an output port of the heat exchange flow channel.

24. The thermal management assembly according to claim 23, wherein when the thermal management assembly is used for heating a battery cell, the second flow channel port is in communication with the input port of the heat exchange flow channel, and the first flow channel port is in communication with the output port of the heat exchange flow channel; and
when the thermal management assembly is used for cooling a battery cell, the first flow channel port is in communication with the input port of the heat exchange flow channel, and the second flow channel port is in communication with the output port of the heat exchange flow channel.

25. A battery, comprising a battery cell and the thermal management assembly according to any one of claims 22 to 24, wherein the thermal management assembly is configured to perform heat exchange with the battery cell.

26. An electric device, wherein the electric device comprises the thermal management assembly according to claim 25.

27. The electric device according to claim 26, further comprising a thermal management input module, a thermal management output module, an input pipeline, and an output pipeline, wherein the fluid collecting pipe fitting comprises a first joint and a second joint; the first joint is in communication with the first flow channel port through a space inside the pipe body; the second joint is in communication with the second flow channel port through a space inside the pipe body; the input pipeline is connected to the thermal management input module and the second joint; and the output pipeline is connected to the thermal management output module and the first joint.
